# EUROPÄISCHE PATENTSCHRIFT

(11) **EP 1 027 387 B1**
(45) Veröffentlichungstag und Bekanntmachung des Hinweises auf die Patenterteilung: **06.02.2002**
(21) Anmeldenummer: 98955469.6
(22) Anmeldetag: 16.10.1998
(51) Int. Cl.: C09B 62/04, C09B 67/22

(54) **VERDOPPELTE REAKTIVFARBSTOFFE**
DOUBLE REACTIVE DYES
COLORANTS REACTIFS DOUBLES

(30) Priorität: 30.10.1997 DE 19747866
(43) Veröffentlichungstag der Anmeldung: 16.08.2000
(73) Patentinhaber: DyStar Textilfarben GmbH & Co. Deutschland KG, 65926 Frankfurt am Main (DE)
(72) Erfinder: PATSCH, Manfred, D-67157 Wachenheim (DE)
(86) Internationale Anmeldenummer: EP9806576
(87) Internationale Veröffentlichungsnummer: WO9923169

(56) Entgegenhaltungen:
- WO-A-97/19137
- DE-A- 2 425 283

## Beschreibung

Die vorliegende Erfindung betrifft neue Reaktivfarbstoffe der Formel I 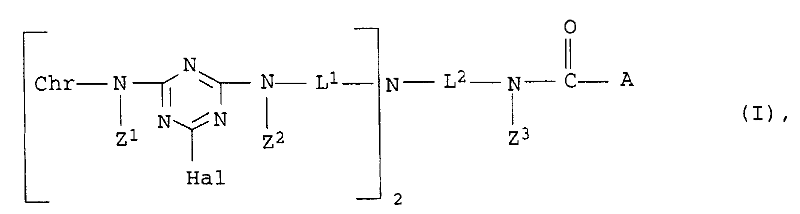 in der
- Chr: den Rest eines Chromophors, der gegebenenfalls weitere faserreaktive Gruppen aufweist und der sich von einem gegebenenfalls metallisierten Mono- oder Disazofarbstoff, einem Triphendioxazin, einem Anthrachinon, einem metallisierten Formazan oder einem metallisierten Phthalocyanin ableitet,
- Z¹, Z² und Z³: unabhängig voneinander für Wasserstoff, oder gegebenenfalls substituiertes C₁-C₆-Alkyl,
- Hal: Fluor oder Chlor
- L¹ und L²: unabhängig voneinander C₂-C₆-Alkylen, das durch 1 oder 2 nichtbenachbarte Sauerstoffatome unterbrochen sein kann, und
- A: Wasserstoff, gegebenenfalls substituiertes C₁-C₆-Alkyl, gegebenenfalls substituiertes Phenyl, gegebenenfalls substituiertes C₂-C₃-Alkenyl, gegebenenfalls substituiertes C₁-C₆-Alkoxy, gegebenenfalls substituiertes Phenoxy oder C₁-C₆-Alkylamino
bedeuten, ihre Mischungen, ein Verfahren zur Herstellung der Mischungen sowie ihre Verwendung zum Färben oder Bedrucken von Hydroxygruppen oder Stickstoffatome aufweisenden Substraten.

Die WO 97/19137 lehrt Reaktivfarbstoffe, die sich aus drei Chromophoren zusammensetzen, die über ein Polyamin verknüpft sind. Bei der Herstellung dieser Reaktivfarbstoffe wird in der Regel neben dem Trimer auch durch unvollständige Umsetzung das schwer lösliche Dimer erhalten. Gute Löslichkeit ist jedoch eine wichtige Anforderung an die Farbstoffe, da bei unvollständiger Lösung ungleichmäßige Färbungen erhalten werden.

Daher war es Aufgabe der vorliegenden Erfindung neue Reaktivfarbstoffe mit vorteilhaften anwendungstechnischen Eingenschaften, insbesondere guter Löslichkeit zur Verfügung zu stellen. Weiterhin sollten sie sich durch hohe Ausgiebigkeit, hohe Naßechtheiten und brilliante Färbungen auszeichnen und ihre nicht fixierten Anteile leicht auswaschbar sein.

Vor allem sollten ihre Mischungen mit dem Trimer vorteilhafte Eigenschaften haben.

Demgemäß wurden die eingangs näher bezeichneten Reaktivfarbstoffe der Formel I gefunden, sowie ihre Mischungen, ein Verfahren zur Herstellung der Mischungen und ihre Verwendung zum Färben oder Bedrucken von Hydroxygruppen oder Stickstoffatome aufweisenden Substraten.

Die neuen Reaktivfarbstoffe der Formel I sind jeweils in Form der freien Säure angegeben. Selbstverständlich werden auch ihre Salze von der Erfindung umfaßt.

Hierbei geeignete Kationen leiten sich von Metall- oder Ammoniumionen ab. Metallionen sind insbesondere die Lithium-, Natrium- oder Kaliumionen. Unter Ammoniumionen im erfindungsgemäßen Sinne sind unsubstituierte oder substituierte Ammoniumkationen zu verstehen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch 1 oder 2 Hydroxygruppen substituiert und/oder durch 1 bis 4 Sauerstoffatomen in Etherfunktion unterbrochen sein kann.

Generell können alle, sowohl die obengenannten wie auch in den nachfolgenden Formeln auftretenden Alkyl-, Alkenyl- und Alkylengruppen sowohl geradkettig als auch verzweigt sein.

Substituierte Alkylreste weisen, sofern nicht anders angegeben, vorzugsweise 1, 2 oder 3 Substituenten, insbesondere 1 oder 2 Substituenten in beliebiger Position auf.

Wenn in der vorliegenden Anmeldung substituierte Alkyl- oder Alkoxygruppen auftreten, so kommen, sofern nicht anderes vermerkt, beispielsweise Chlor, Hydroxy, Methoxy, Carboxyl und Methoxycarbonyl als Substituenten in Betracht.

Substituierte Alkenylgruppen können z.B. mit Carboxyl und Methoxycarbonyl substituiert sein.

Wenn in der vorliegenden Anmeldung substituierte Phenyl- oder Phenoxygruppen auftreten, so können, sofern nicht anders vermerkt, z.B. C₁-C₄-Alkyl, C₁-C₄-Alkoxy, Halogen, Nitro, Hydroxysulfonyl, Carboxyl, Sulfamoyl, Carbamoyl oder C₁-C₄-Mono- oder Dialkylsulfamoyl als Substituenten in Betracht kommen. Sie weisen dann in der Regel 1 bis 3, vorzugsweise 1 oder 2, Substituenten auf.

Geeignete Halogenreste sind Fluor, Chlor und Brom.

Reste Z¹, Z², Z³ und A sind z.B. Methyl, Ethyl, Propyl, Isopropyl, Butyl, Isobutyl, sec.-Butyl, tert.-Butyl, Pentyl, Isopentyl, Neopentyl, tert-Pentyl, Hexyl, 2-Methylpentyl, Chlormethyl, 2-Chlorethyl, 2- oder 3-Chlorpropyl, 2- oder 4-Chlorbutyl, Hydroxymethyl, 2-Hydroxyethyl, 2- oder 3-Hydroxypropyl, 2- oder 4-Hydroxybutyl, Methoxymethyl, 2-Methoxyethyl, 2- oder 3-Methoxypropyl, 2- oder 4-Methoxybutyl, Carboxymethyl, 2-Carboxyethyl, 2-oder 3-Carboxypropyl, 2- oder 4-Carboxybutyl, Methoxycarbonylmethyl, 2-Methoxycarbonylethyl, 2- oder 3-Methoxycarbonylpropyl oder 2- oder 4-Methoxycarbonylbutyl.

Reste A sind weiterhin z.B. Phenyl, 2-, 3- oder 4-Methylphenyl, 2-, 3- oder 4-Ethylphenyl, 2-, 3- oder 4-Propylphenyl, 2-, 3-oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Chlorphenyl, 2,6-Dichlorphenyl, 2-, 3- oder 4-Nitrophenyl, 2-, 3- oder 4-Hydroxysulfonylphenyl, 2-, 3- oder 4-Carboxyphenyl, 2-, 3- oder 4-Sulfamoylphenyl, 2-, 3- oder 4-Carbamoylphenyl, 2-, 3-oder 4-Monomethylcarbamoylphenyl, 2-, 3- oder 4-Dimethylcarbamoylphenyl, Vinyl, Allyl, Isopropenyl, 1-Propenyl, Methoxy, Ethoxy, Propoxy, Isopropoxy, Butoxy, Isobutoxy, sec.-Butoxy, Pentyloxy, Isopentyloxy, Neopentyloxy, tert.-Pentyloxy, Hexyloxy, Mono- oder Dimethylamino, Mono- oder Diethylamino, Mono- oder Dipropylamino, Mono- oder Diisopropylamino, Mono- oder Dihexylamino, 2-Carboxyvinyl oder 2-Carboxypropenyl.

Reste L¹ und L² sind z.B. (CH₂)₂, (CH₂)₃, (CH₂)₄, CH(CH₃)CH₂, CH(CH₃)CH(CH₃), (CH₂)₅, (CH₂)₆, (CH₂)₂O(CH₂)₂, (CH₂)₃O(CH₂)₂ oder (CH₂)₄O(CH₂)₂.

Unter faserreaktiven Gruppen sind sowohl additiv reagierende faserreaktive Reste wie auch substitutiv reagierende faserreaktive Reste zu verstehen.

Eine Substitution am faserreaktiven Rest mit den Hydroxygruppen oder Stickstoffatome enthaltenden Gruppen in den Substraten, z.B. den Hydroxygruppen der Cellulose bedeutet, daß die Austrittsgruppen oder -atome (z.B. Fluor oder Chlor) im Ankerrest durch die Hydroxygruppen der Cellulose gemäß folgendem Schema substituiert werden:

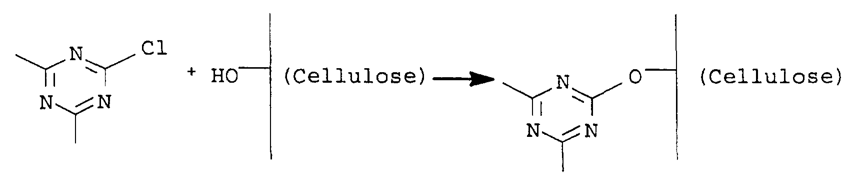

Additiv reagierenden faserreaktive Reste reagieren beispielsweise nach Eliminierung zum Vinylsulfon mit den Hydroxygruppen der Cellulose gemäß folgendem Schema:

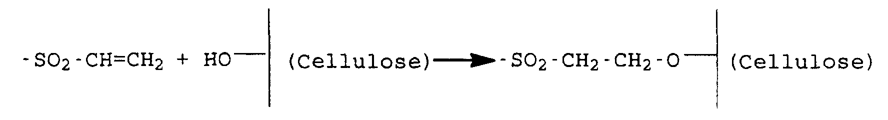

Substitutiv reagierende faserreaktive Reste sind z.B. halogensubstituierte Reste, die sich vom 1,3,5-Triazin, Chinoxalin, Phthalazin, Pyrimidin, Pyridazin oder dem 2-Alkylsulfonylbenzthiazol als heterocyclischen Grundkörper ableiten.

Besonders seien folgende heterocyclische Reste genannt: 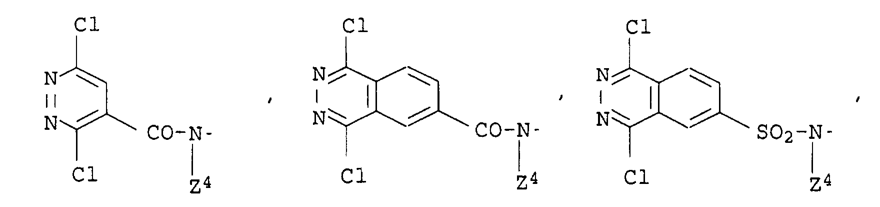 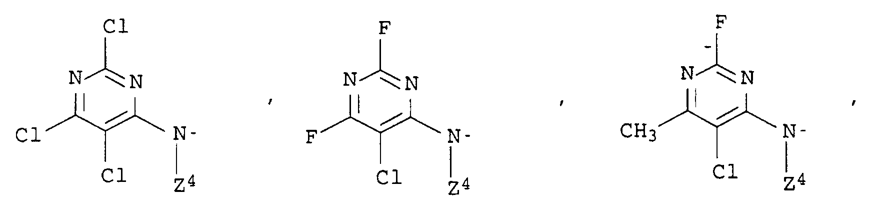 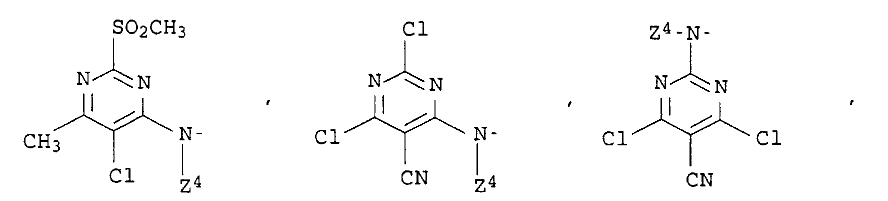 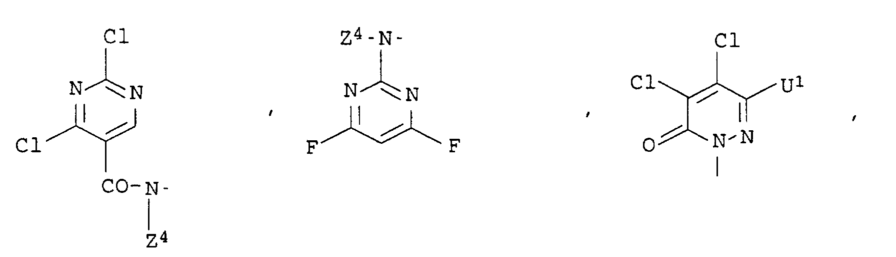 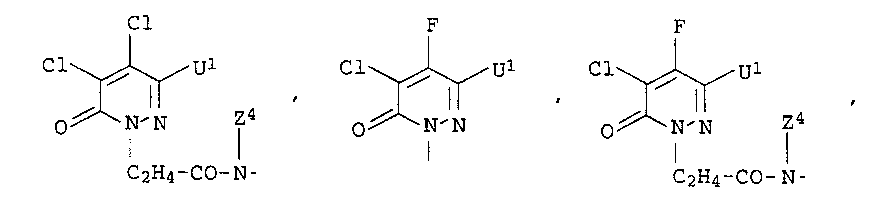 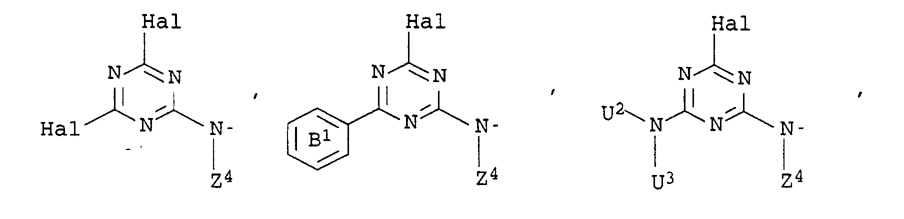 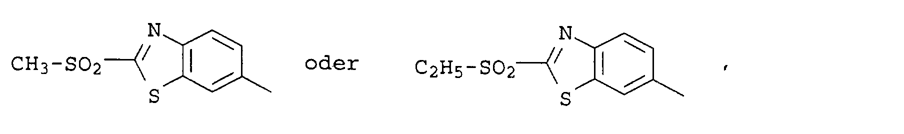 worin Z⁴ ein Rest Z¹ bedeutet, Hal jeweils die obengenannte Bedeutung besitzen und
- U¹: Wasserstoff oder Nitro und
- U² und U³: unabhängig voneinander jeweils Wasserstoff, C₁-C₆-Alkyl, das gegebenenfalls durch Hydroxy, Halogen, Cyano, Hydroxysulfonyl oder einen Rest der Formel -SO₂-Y, worin Y Vinyl oder einen Rest der Formel C₂C₄Q bedeutet und Q für eine unter alkalischen Reaktionsbedingungen abspaltbare Gruppe steht, substituiert ist und jeweils durch 1 oder 2 nicht vernachbarte Sauerstoffatome, Imino- oder C₁-C₄-Alkyliminogruppen unterbrochen sein kann, oder
- U² und U³: zusammen mit dem sie verbindenden Stickstoffatom, Pyrrolidinyl, Piperidinyl, Morpholinyl, Piperazinyl oder N-(C₁-C₄-Alkyl)piperazinyl oder
- U²: auch einen Rest der Formel 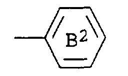 bedeuten,
wobei die Ringe B¹ und B² jeweils ein- oder zweifach durch Hydroxysulfonyl substituiert und/oder benzoanelliert sein können und der Ring B² davon unabhängig ein- oder zweifach durch Chlor, Nitro, C₁-C₄-Alkyl, C₁-C₄-Alkoxy, Cyano, Carboxyl, Acetylamino, Hydroxysulfonylmethyl oder einen Rest der Formel CH₂-SO₂-Y, SO₂-Y, NH-CO-Y oder NU²-CO-NU²-L³-SO₂-Y, worin Y und U² jeweils die obengenannte Bedeutung besitzen und L³ für C₂-C₆-Alkylen, das gegebenenfalls durch Hydroxy, Chlor, Cyano, Carboxyl, C₁-C₄-Alkoxycarbonyl, C₁-C₄-Alkanoyloxy oder Sulfato substituiert ist und durch jeweils 1 oder 2 Sauerstoffatome in Etherfunktion oder Imino- oder C₁-C₄-Alkyliminogruppen unterbrochen sein kann, steht, substituiert sein kann.

Additiv reagierende faserreaktive Reste sind beispielsweise Acryloyl-, Mono-, Di- oder Trichloracryloyl, Mono-, Di- oder Tribromacryloyl, -CO-CCl=CH-COOH, -CO-CH=CCl-COOH, 2-Chlorpropionyl, 1,2-Dichlorpropionyl, 1,2-Dibrompropionyl, 3-Phenylsulfonylpropionyl, 3-Methylsulfonylpropionyl, 2-Sulfatoethylaminosulfonyl, 2-Chlor-2,3,3-trifluorcyclobutylcarbonyl, 2,2,3,3-Tetrafluorcyclobutylcarbonyl, 2,2,3,3-Tetrafluorcyclobutylsulfonyl, 2-(2,2,3,3-Tetrafluorcyclobutyl)acryloyl, 1- oder 2-Alkyl- oder 1- oder 2-Arylsulfonylacryloyl, wie 1- oder 2-Methylsulfonylacryloyl, oder ein Rest der Formel SO₂-Y, CONH-L⁴-SO₂-Y oder NHCONH-L⁴-SO₂-Y, worin Y die obengenannte Bedeutung besitzt und L⁴ für C₁-C₄-Alkylen oder Phenylen steht. Reste Q sind z.B. Chlor, Brom, C₁-C₄-Alkylsulfonyl, Phenylsulfonyl, OSO₃H, SSO₃H, OP(O)(OH)₂, C₁-C₄-Alkylsulfonyloxy, Phenylsulfonyloxy, C₁-C₄-Alkanoyloxy, C₁-C₄-Dialkylamino oder ein Rest der Formel 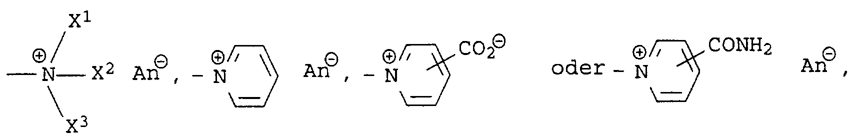 wobei X¹, X² und X³ gleich oder verschieden sind und unabhängig voneinander jeweils die Bedeutung von C₁-C₄-Alkyl oder Benzyl und An^{⊖} jeweils die Bedeutung eines Äquivalents eines Anions besitzen. Als Anionen können dabei z.B. Fluorid, Chlorid, Bromid, Iodid, Mono-, Di- oder Trichloracetat, Methansulfonat, Benzolsulfonat oder 2- oder 4-Methylbenzolsulfonat in Betracht kommen.

Chr ist der monovalente Rest eines Chromophors, der sich von einen gegebenenfalls metallisierten Mono- oder Disazofarbstoff, einem Triphendioxazin, einem Anthrachinon, einem metallisierten Formazan oder einem metallisierten Phthalocyanin ableitet.

Wichtige Kupplungskomponenten der Mono- oder Disazofarbstoffe HK leiten sich z.B. von Verbindungen aus der Benzol-, Naphthalin-, Pyrazol-, Pyridin-, Pyrimidin-, Indol- oder N-Arylacetoacetamidreihe ab und können faserreaktive Gruppen tragen.

Wichtige Diazokomponenten D―NH₂ der Mono- oder Disazofarbstoffe leiten sich z.B. von Verbindungen aus der Anilin- oder Aminonaphthalinreihe ab und können faserreaktive Gruppen tragen.

Geeignete Azofarbstoffe, von denen sich solche Reste ableiten, sind an sich bekannt und in großer Zahl beschrieben, z.B. in K. Venkataraman "The Chemistry of Synthetic Dyes", Vol. VI, Academic Press, New York, London, 1972. Die Azofarbstoffe gehorchen der Formel II

D― N= N―K(―N= N―D)₁ (II),

in der D den Rest einer Diazokomponente, K den Rest einer Kupplungskomponente und l 0 oder 1 bedeuten, worin, wenn l 1 ist, die Reste D gleich oder verschieden voneinander sind. Die Bindung zum Cyanurhalogenid kann dabei über Amino- oder Iminogruppen sowohl der Diazokomponente als auch Kupplungskomponente erfolgen.

Wertvolle Farbstoffe, von denen sich der Rest Chr ableitet, sind z.B. wasserlösliche Azofarbstoffe, insbesondere Monoazofarbstoffe der Formel II (1 = 0), die Hydroxysulfonyl- und/oder Carboxylgruppen aufweisen können.

Bevorzugt leitet sich der Rest Chr von nichtmetallisierten Azofarbstoffen ab, insbesondere von solchen, die Hydroxysulfonyl- und/oder Carboxylgruppen enthalten, wobei jene, die 1 bis 4 Hydroxysulfonylgruppen aufweisen, besonders hervorzuheben sind.

Wichtige Azofarbstoffe, von denen sich der Rest Chr ableitet, sind beispielsweise solche der Phenyl-azo-naphthalin-, Phenyl-azo-1-phenylpyrazol-5-on-, Phenyl-azo-benzol-, Naphthyl-azobenzol-, Phenyl-azo-aminonaphthalin-, Naphthyl-azo-naphthalin-, Naphthyl-azo-1-phenylpyrazol-5-on-, Phenyl-azo-pyridon-, Phenylazo-aminopyridin-, Naphthyl-azo-pyridon-, Naphthyl-azo-aminopyridin- oder Stilbyl-azo-benzolreihe.

Reste D¹ von Diazokomponenten der Anilin- oder Aminonaphthalinreihe, die keine faserreaktiven Gruppen tragen, leiten sich beispielsweise von Aminen der Formeln IIIa-f 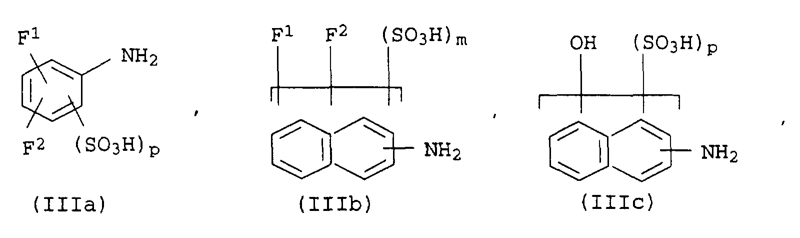 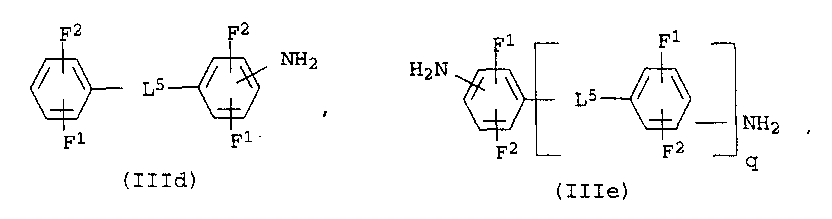 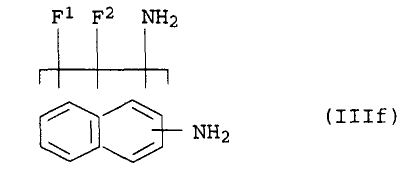 ab, worin
- m: 0, 1, 2 oder 3,
- p: 0, 1 oder 2,
- q: 0 oder 1,
- F¹: Wasserstoff, C₁-C₄-Alkyl, C₁-C₄-Alkoxy, Acetyl, Cyano, Carboxyl, Hydroxysulfonyl, C₁-C₄-Alkoxycarbonyl, Hydroxy, Carbamoyl, Mono- oder Di-(C₁-C₄)-alkylcarbamoyl, Fluor, Chlor, Brom oder Trifluormethyl,
- F²: Wasserstoff, C₁-C₄-Alkyl, C₁-C₄-Alkoxy, Hydroxysulfonylmethyl, Cyano, Carboxyl, Hydroxysulfonyl, Acetylamino, C₁-C₄-Alkoxycarbonyl, Carbamoyl, Mono- oder Di-(C₁-C₄)-alkylcarbamoyl, Fluor, Chlor, Nitro, Sulfamoyl, C₁-C₄-Mono- oder Dialkylsulfamoyl, C₁-C₄-Alkylsulfonyl, Phenylsulfonyl oder Phenoxy und
- L⁵: eine direkte Bindung, Sauerstoff, Schwefel oder einen Rest der Formel -NHCO-, -NHCONH-, -CONH-, -CO-, -NHSO₂-, -SO₂NH-, -SO₂-, -CH=CH-, -CH₂-CH₂-, -CH₂-, -NH-, oder -N=N- bedeuten.

Bevorzugt sind dabei solche Komponenten, in denen F¹ Wasserstoff, Methyl, Methoxy, Carboxyl, Hydroxysulfonyl, Hydroxy oder Chlor, F² Wasserstoff, Methyl, Methoxy, Carboxyl, Hydroxysulfonyl, Acetylamino oder Chlor und L⁵ einen Rest der Formel -CO-, -SO₂-, -CH=CH-, -CH₂-CH₂-, -CH₂- oder -N=N- bedeuten.

Aromatische Amine, die sich als Diazokomponenten eignen, sind beispielsweise Anilin, 2-Methoxyanilin, 2-Methylanilin, 4-Chlor-2-aminoanisol, 4-Methylanilin, 4-Methoxyanilin, 2-Methoxy-5-methylanilin, 2,5-Dimethoxyanilin, 2,5-Dimethylanilin, 2,4-Dimethylanilin, 2,5-Diethoxyanilin, 2-Chloranilin, 3-Chloranilin, 4-Chloranilin, 2,5-Dichloranilin, 4-Chlor-2-nitroanilin, 4-Chlor-2-methylanilin, 3-Chlor-2-methylanilin, 4-Chlor-2-aminotoluol, 4-Phenylsulfonylanilin, 2-Ethoxy-1-naphthylamin, 1-Naphthylamin, 2-Naphthylamin, 4-Methylsulfonylanilin, 2,4-Dichloranilin-5-carbonsäure, 2-Aminobenzoesäure, 4-Aminobenzoesäure, 3-Aminobenzoesäure, 3-Chloranilin-6-carbonsäure, Anilin-2- oder -3- oder -4-sulfonsäure, Anilin-2,5-disulfonsäure, Anilin-2,4-disulfonsäure, Anilin-3,5-disulfonsäure, 2-Aminotoluol-4-sulfonsäure, 2-Aminoanisol-4-sulfonsäure, 2-Aminoanisol-5-sulfonsäure, 2-Ethoxyanilin-5-sulfonsäure, 2-Ethoxyanilin-4-sulfonsäure, 4-Hydroxysulfonyl-2-aminobenzoesäure, 2,5-Dimethoxyanilin-4-sulfonsäure, 2,4-Dimethoxyanilin-5-sulfonsäure, 2-Methoxy-5-methylanilin-4-sulfonsäure, 4-Aminoanisol-3-sulfonsäure, 4-Aminotoluol-3-sulfonsäure, 2-Aminotoluol-5-sulfonsäure, 2-Chloranilin-4-sulfonsäure, 2-Chloranilin-5-sulfonsäure, 2-Bromanilin-4-sulfonsäure, 2,6-Dichloranilin-4-sulfonsäure, 2,6-Dimethylanilin-3- oder -4-sulfonsäure, 3-Acetylaminoanilin-6-sulfonsäure, 4-Acetylaminoanilin-2-sulfonsäure, 1-Aminonaphthalin-4-sulfonsäure, 1-Aminonaphthalin-3-sulfonsäure, 1-Aminonaphthalin-5-sulfonsäure, 1-Aminonaphthalin-6-sulfonsäure, 1-Aminonaphthalin-7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5- oder -6- oder -8-sulfonsäure, 2-Aminonaphthalin-3,6,8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3,6-disulfonsäure, 2-Aminonaphthalin-4,8-disulfonsäure, 2-Aminophenol-4-sulfonsäure, 2-Aminophenol-5-sulfonsäure, 3-Aminophenol-6-sulfonsäure, 1-Hydroxy-2-aminonaphthalin-5,8- oder -4,6-disulfonsäure, 4-Aminodiphenylamin, 4-Amino-4'-methoxydiphenylamin, 4-Amino-4'-methoxydiphenylamin-3-sulfonsäure, 4-(2'-Methylphenylazo)-2-methylanilin, 4-Aminoazobenzol, 4'-Nitrophenylazo-1-aminonaphthalin, 4-(6'-Hydroxysulfonylnaphthylazo)-1-aminonaphthalin, 4-(2',5'-Dihydroxysulfonylphenylazo)-1-aminonaphthalin, 4'-Amino-3'-methyl-3-nitrobenzophenon, 4-Aminobenzophenon, 4-(4'-Aminophenylazo)benzolsulfonsäure, 4-(4'-Amino-3'-methoxyphenylazo)benzolsulfonsäure oder 2-Ethoxy-1-naphthylamin-6-sulfonsäure.

Aromatische Diamine, die sich als Tetraazokomponenten oder auch als Verknüpfung zum Cyanurhalogenid eignen sind beispielsweise 1,3-Diaminobenzol, 1,3-Diaminobenzol-4-sulfonsäure, 1,4-Diaminobenzol, 1,4-Diaminobenzol-2-sulfonsäure, 1,4-Diamino-2-methylbenzol, 1,4-Diamino-2-methoxybenzol, 1,3-Diamino-4-methylbenzol, 1,3-Diaminobenzol-5-sulfonsäure, 1,3-Diamino-5-methylbenzol, 1,6-Diaminonaphthalin-4-sulfonsäure, 2,6-Diaminonaphthalin-4,8-disulfonsäure, 3,3'-Diaminodiphenylsulfon, 4,4'-Diaminodiphenylsulfon, 4,4'-Diaminostilben-2,2'-disulfonsäure, 2,2'-Diaminodiphenylsulfon, 2,2'-Diaminodiphenylsulfon-4,5-disulfonsäure, 4,4'-Diaminobenzophenon, 4,4'-Diamino-3,3'-dinitrobenzophenon, 3,3'-Diamino-4,4'-dichlorbenzophenon, 4,4'- oder 3,3'-Diaminodiphenyl, 4,4'-Diamino-3,3'-dichlordiphenyl, 4,4'-Diamino-3,3'-dimethoxy- oder -3,3'-dimethyl- oder -2,2'-dimethyl- oder -2,2'-dichlor- oder -3,3'-diethoxydiphenyl, 4,4'-Diamino-3,3'-dimethyl-6,6'-dinitrodiphenyl, 4,4'-Diaminodiphenyl-2,2'- oder -3,3'-disulfonsäure, 4,4'-Diamino-3,3'-dimethyl- oder -3,3'-dimethoxy- oder -2,2'-dimethoxydiphenyl-6,6'-disulfonsäure, 4,4'-Diamino-2,2',5,5'-tetrachlordiphenyl, 4,4'-Diamino-3,3'-dinitrodiphenyl, 4,4'-Diamino-2,2'-dichlor-5,5'-dimethoxydiphenyl, 4,4'-Diaminodiphenyl-2,2'- oder -3,3'-dicarbonsäure, 4,4'-Diamino-3,3'-dimethyldiphenyl-5,5'-disulfonsäure, 4,4'-Diamino-2-nitrodiphenyl, 4,4'-Diamino-3-ethoxy- oder -3-hydroxysulfonyldiphenyl, 4,4'-Diamino-3,3'-dimethyldiphenyl-5-sulfonsäure, 4,-4'-Diaminodiphenylmethan, 4,4'-Diamino-3,3'-dimethyldiphenylmethan, 4,4'-Diamino-2,2',3,3'-tetramethyldiphenylmethan, 4,4'-Diaminodiphenylethan, 4,4'-Diaminostilben oder 4,4'-Diaminodiphenylmethan-3,3'-dicarbonsäure.

Aromatische Reste D² von Diazokomponenten aus der Anilin- oder Aminonaphthalinreihe, die weitere faserreaktive Reste tragen, leiten sich beispielsweise von Aminen der Formeln VIa-c 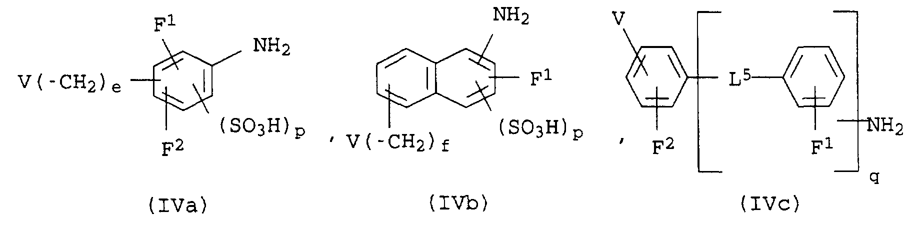 ab, in denen F¹, F², p, q und L⁵ jeweils die obengenannte Bedeutung besitzen und e und f gleich oder verschieden sind und unabhängig voneinander jeweils 0 oder 1 und V einen additiv oder substitutiv reagierenden faserreaktiven Rest bedeuten.

Aromatische Amine, die den, den faserreaktiven Rest V aufweisenden, Derivaten der Formel IVa, IVb oder IVc zugrundeliegen, sind beispielsweise 1,3-Diaminobenzol, 1,3-Diaminobenzol-4-sulfonsäure, 1,3-Diaminobenzol-4,6-disulfonsäure, 1,4-Diaminobenzol, 1,4-Diaminobenzol-2-sulfonsäure, 1,4-Diaminobenzol-2,5-disulfonsäure, 1,4-Diamino-2-methylbenzol, 1,4-Diamino-2-methoxybenzol, 1,3-Diamino-4-methylbenzol, 1,4-Diaminobenzol-2,6-disulfonsäure, 1,5-Diamino-4-methylbenzol-2-sulfonsäure, 1,5-Diamino-4-methoxybenzol-2-sulfonsäure, 1,6-Diaminonaphth-2-ol-4-sulfonsäure, 1,6-Diaminonaphthalin-4-sulfonsäure, 2,6-Diaminonaphthalin-4,8-disulfonsäure, 2,6-Diaminonaphth-1-ol-4,8-disulfonsäure, 1,3-Diaminobenzol-5-sulfonsäure, 1,3-Diamino-5-methylbenzol, 2,6-Diaminophenol-4-sulfonsäure, 5-Aminomethyl-2-aminonaphthalin-1-sulfonsäure, 5-(N-Methylaminomethyl)-2-aminonaphthalin-1-sulfonsäure, 4,4'-Diaminostilben-3,3'-dicarbonsäure, 4-(N-Methylaminomethyl)anilin-2-sulfonsäure oder 3-(N-Methylaminomethyl)-anilin-6-sulfonsäure.

Faserreaktivgruppenfreie Kupplungskomponenten sind bevorzugt Verbindungen der Naphthalin-, Anilin-, Pyrazolon-, Aminopyrazol-, 2,6-Diaminopyridin-, Pyridon-, Hydroxypyrimidin-, Indol-, N-Aryl-acetoacetamidreihe und entsprechen beispielsweise den Verbindungen der Formeln V a-m 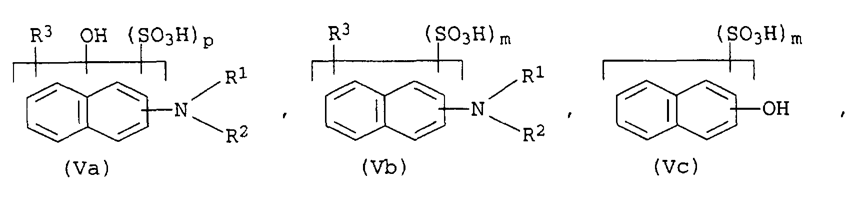 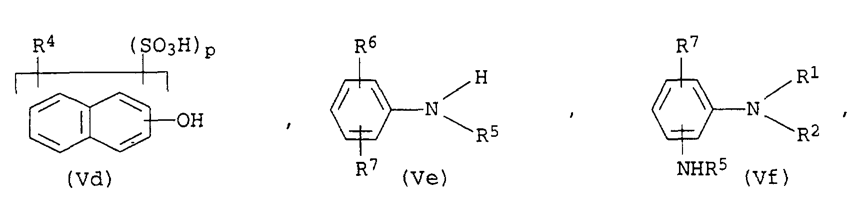 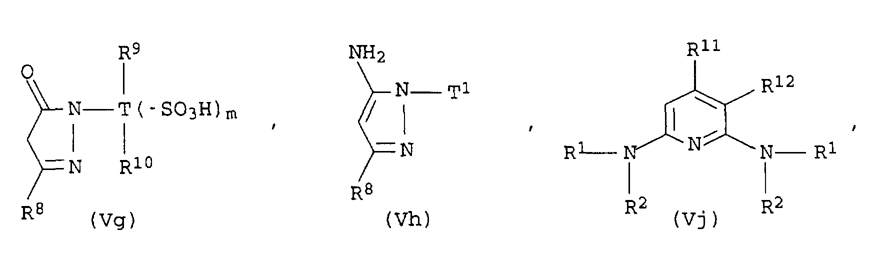 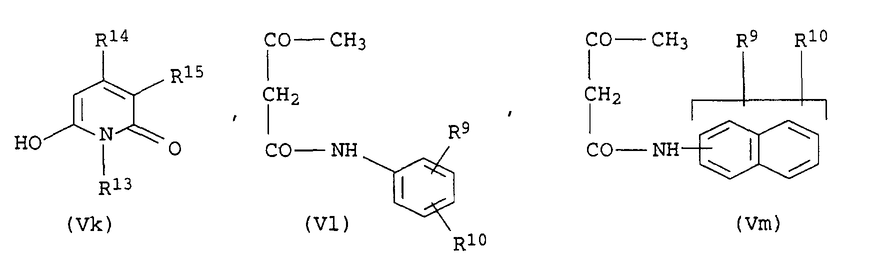 worin
- m: 0, 1, 2 oder 3,
- p: 0, 1 oder 2,
- R¹: Wasserstoff oder C₁-C₄-Alkyl, das durch Hydroxy, Cyano, Carboxyl, Hydroxysulfonyl, Sulfato, Methoxycarbonyl, Ethoxycarbonyl oder Acetoxy substituiert sein kann,
- R²: Wasserstoff, C₁-C₄-Alkyl, das durch Hydroxy, Cyano, Carboxyl, Hydroxysulfonyl, Sulfato, Methoxycarbonyl, Ethoxycarbonyl oder Acetoxy substituiert sein kann, Benzyl oder Phenyl, das durch C₁-C₄-Alkyl, C₁-C₄-Alkoxy, Chlor oder Hydroxysulfonyl substituiert sein kann,
- R³: Wasserstoff oder C₁-C₄-Alkyl, das durch Hydroxysulfonyl oder Carboxyl substituiert sein kann,
- R⁴: C₁-C₆-Alkylureido, Phenylureido, das durch Chlor, Methyl, Methoxy, Nitro, Hydroxysulfonyl oder Carboxyl substituiert sein kann, C₁-C₆-Alkanoylamino, das durch Hydroxysulfonyl oder Chlor substituiert sein kann, Cyclohexylcarbonylamino, Benzoylamino, das durch Chlor, Methyl, Methoxy, Nitro, Hydroxysulfonyl oder Carboxyl substituiert sein kann, oder Hydroxy,
- R⁵: Wasserstoff, C₁-C₆-Alkyl, insbesondere C₁-C₄-Alkyl, das jeweils durch Phenyl, C₁-C₄-Alkoxy, Hydroxy, Phenoxy oder C₁-C₄-Alkanoyloxy substituiert sein kann, C₅-C₇-Cycloalkyl, Hydroxysulfonylphenyl, C₁-C₄-Alkanoyl, Carbamoyl, Mono- oder Di-(C₁-C₄)-alkylcarbamoyl, Phenylcarbamoyl oder Cyclohexylcarbamoyl,
- R⁶: C₁-C₄-Alkoxy, Chlor, Brom, Hydroxysulfonyl, C₁-C₄-Alkanoylamino, Amino, Ureido, Methylsulfonylamino, Ethylsulfonylamino, Dimethylaminosulfonylamino, Methylamino, Ethylamino, Dimethylamino oder Diethylamino
- R⁷: Wasserstoff, C₁-C₄-Alkyl, C₁-C₄-Alkoxy, Hydroxysulfonyl, Chlor oder Brom,
- T: den Rest eines Benzol- oder Naphthalinrings,
- T¹: C₁-C₄-Alkyl, Cyclohexyl, Benzyl oder Phenyl, das ein- bis dreifach durch Fluor, Chlor, Brom, Methoxy, Nitro, Hydroxysulfonyl, Carboxyl, Acetyl, Acetylamino, Methylsulfonyl, Sulfamoyl oder Carbamoyl substituiert ist,
- R⁸: Methyl, Carboxyl, C₁-C₄-Alkoxycarbonyl oder Phenyl,
- R⁹: Wasserstoff, C₁-C₄-Alkyl, C₁-C₄-Alkoxy, Acetyl, Cyano, Carboxyl, Hydroxysulfonyl, C₁-C₄-Alkoxycarbonyl, Hydroxy, Carbamoyl, Mono- oder Di-(C₁-C₄)-alkylcarbamoyl, Fluor, Chlor, Brom oder Trifluormethyl,
- R¹⁰: Wasserstoff, C₁-C₄-Alkyl, C₁-C₄-Alkoxy, Cyano, Carboxyl, Hydroxysulfonyl, Acetylamino, C₁-C₄-Alkoxycarbonyl, Carbamoyl, Mono- oder Di-(C₁-C₄)-alkylcarbamoyl, Fluor, Chlor, Nitro, Sulfamoyl, Mono- oder Di-(C₁-C₄)-alkylsulfamoyl, C₁-C₄-Alkylsulfonyl, Phenylsulfonyl oder Phenoxy,
- R¹¹: Wasserstoff oder C₁-C₄-Alkyl, das durch C₁-C₄-Alkoxy oder Cyano substituiert sein kann,
- R¹²: Wasserstoff, Methyl, Hydroxysulfonylmethyl, Hydroxysulfonyl, Cyano oder Carbamoyl,
- R¹³: Wasserstoff, C₁-C₄-Alkyl, das durch Phenyl, Hydroxysulfonylphenyl, Hydroxy, Amino, C₁-C₄-Alkoxyl, Carboxyl, Hydroxysulfonyl, Acetylamino, Benzoylamino oder Cyano substituiert sein kann, Cyclohexyl, Phenyl, das gegebenenfalls durch Carboxyl, Hydroxysulfonyl, Benzoylamino, Acetylamino, Methyl, Methoxy, Cyano oder Chlor substituiert ist, oder Amino, das durch Phenyl, C₁-C₄-Alkyl, C₁-C₄-Alkanoyl oder Benzoyl substituiert ist,
- R¹⁴: Wasserstoff, C₁-C₄-Alkyl, Phenyl, Hydroxyl, Cyano, Acetyl, Benzoyl, Carboxyl, Methoxycarbonyl, Carbamoyl oder Hydroxysulfonylmethyl und
- R¹⁵: Wasserstoff, Chlor, Brom, Acetylamino, Amino, Nitro, Hydroxysulfonyl, Sulfamoyl, Methylsulfonyl, Phenylsulfonyl, Carboxyl, C₁-C₄-Alkoxycarbonyl, C₁-C₄-Alkanoyl, Benzoyl, Carbamoyl, Cyano oder Hydroxysulfonylmethyl bedeuten.

Reste U², U³, F¹, F², R¹, R², R³, R⁵, R⁷, T¹, R⁹, R¹⁰, R¹¹, R¹³, R¹⁴ sowie die unten erwähnten Reste G³, G⁵, G¹² und G¹³ sind z.B. Methyl, Ethyl, Propyl, Isopropyl, Butyl, Isobutyl, sec-Butyl oder tert-Butyl.

Die Reste U², U³ und R⁵ können weiterhin Pentyl, Isopentyl, Neopentyl, tert-Pentyl, Hexyl oder 2-Methylpentyl sein.

Die Reste U², U³, R¹, R², R⁵ und R¹³ sind Hydroxy-C₁-C₄-alkyl wie Hydroxymethyl, 1-Hydroxyeth-1-yl, 2-Hydroxyeth-1-yl, 1-Hydroxyprop-1-yl, 2-Hydroxyprop-1-yl, 3-Hydroxyprop-1-yl, 1-Hydroxyprop-2-yl, 2-Hydroxyprop-2-yl, 1-Hydroxbut-1-yl, 2-Hydroxybut-1-yl, -3-Hydroxybut-1-yl, 4-Hydroxybut-1-yl, 1-Hydroxybut-2-yl, 2-Hydroxybut-2-yl, 1-Hydroxybut-3-yl, 2-Hydroxybut-3-yl, 1-Hydroxy-2-methyl-prop-3-yl, 2-Hydroxy-2-methylprop-3-yl, 3-Hydroxy-2-methyl-prop-3-yl und 2-Hydroxymethylprop-2-yl.

Die Reste U², U³, R¹, R², R¹¹ und R¹³ sind weiterhin z.B. Cyanomethyl, Cyanoethyl, 2- oder 3-Cyanopropyl oder 2- oder 4-Cyanobutyl.

Die Reste R¹, R², R³ und R¹³ sind beispielsweise Carboxymethyl, Carboxyethyl, 2- oder 3-Carboxypropyl oder 2- oder 4-Carboxybutyl.

Die Reste U², U³, R¹, R² und R³ stehen ferner für beispielsweise Hydroxysulfonylmethyl, 2-Hydroxysulfonylethyl, 2- oder 3-Hydroxysulfonylpropyl oder 2- oder 4-Hydroxysulfonylbutyl.

R¹ und R² stehen weiterhin für z.B. 2-Sulfatoethyl, 2- oder 3-Sulfatopropyl, 2- oder 4-Sulfatobutyl, Methoxycarbonylmethyl, 2-Methoxycarbonylethyl, 2- oder 3-Methoxycarbonylpropyl, 2- oder 4-Methoxycarbonylbutyl, Ethoxycarbonylmethyl, 2-Ethoxycarbonylethyl, 2- oder 3-Ethoxycarbonylpropyl, 2- oder 4-Ethoxycarbonylbutyl, Acetoxymethyl, 2-Acetoxyethyl, 2- oder 3-Acetoxypropyl oder 2- oder 4-Acetoxybutyl.

Die Reste R² können weiterhin z.B. 2-, 3- oder 4-Methylphenyl, 2-, 3- oder 4-Ethylphenyl, 2-, 3- oder 4-Propylphenyl, 2-, 3-oder 4-Isopropylphenyl, 2-, 3- oder 4-Butylphenyl, 2-, 3- oder 4-Isobutylphenyl, 2-, 3- oder 4-sec-Butylphenyl, 2-, 3- oder 4-tert-Butylphenyl, 2-, 3- oder 4-Methoxyphenyl, 2-, 3- oder 4-Ethoxyphenyl, 2-, 3- oder 4-Propoxyphenyl, 2-, 3- oder 4-Iso-propoxyphenyl, 2-, 3- oder 4-Butoxyphenyl, 2-, 3- oder 4-Iso-butoxyphenyl, 2-, 3- oder 4-sec-Butoxyphenyl, 2-, 3- oder 4-tert-Butoxyphenyl oder 2-, 3- oder 4-Chlorphenyl sein.

Die Reste R², R⁵ und T¹ sind weiterhin z.B. 2-, 3- oder 4-Hydroxysulfonylphenyl.

Der Rest R⁴ ist z.B. Methylureido, Ethylureido, Propylureido, Butylureido, Pentylureido, Hexylureido, Formylamino, Acetylamino, Propionylamino, Butyrylamino, Isopropylcarbonylamino, Valerylamino, Isobutylcarbonylamino, sec-Butylcarbonylamino, tert-Butyl-carbonylamino oder Pentylcarbonylamino.

Die Reste R⁵ und R¹³ können z.B. Benzyl, 1-Phenylethyl, 2-Phenylethyl, 1-Phenylprop-1-yl, 2-Phenylprop-1-yl, 3-Phenylprop-1-yl, 1-Phenylbut-1-yl, 2-Phenylbut-1-yl, 3-Phenylbut-1-yl, 4-Phenyl-but-1-yl, 1-Phenylbut-2-yl, 2-Phenylbut-2-yl, 3-Phenylbut-2-yl, 3-Phenylbut-2-yl, 4-Phenylbut-2-yl, 1-(Phenylmethyl)-eth-1-yl, 1-(Phenylmethyl)-1-(methyl)-eth-1-yl und 1-(Phenylmethyl)-prop-1-yl, vorzugsweise Benzyl und 2-Phenylethyl sein.

Die Reste R⁵, R¹¹ und R¹³ stehen weiter für beispielsweise Methoxymethyl, Ethoxymethyl, n-Propoxymethyl, (1-Methylethoxy)methyl, n-Butoxymethyl, (1-Methylpropoxy)methyl, (2-Methylpropoxy)methyl, (1,1-Dimethylethoxy)methyl, 2-(Methoxy)ethyl, 2-(Ethoxy)ethyl, 2-(n-Propoxy)ethyl, 2-(1-Methoxyethoxy)ethyl, 2-(n-Butoxy)ethyl, 2-(1-Methoxypropoxy)ethyl, 2-(2-Methylpropoxy)ethyl, 2-(1,1-Dimethylethoxy)ethyl, 2-(Methoxy)propyl, 2-(Ethoxy)propyl, 2-(n-Propoxy)propyl, 2-(1-Methylethoxy)propyl, 2-(n-Butoxy)propyl, 2-(1-Methylpropoxy)propyl, 2-(2-Methylpropoxy)propyl, 2-(1,1- Dimethylethoxy)propyl, 3-(Methoxy)propyl, 3-(Ethoxy)propyl, 3-(n-Propoxy)propyl, 3-(1-Methylethoxy)propyl, 3-(n-Butoxy)- propyl, 3-(1-Methylpropoxy)propyl, 3-(2-Methylpropoxy)propyl, 3-(1,1-Dimethylethoxy)propyl, 2-(Methoxy)butyl, 2-(Ethoxy)butyl, 2-(n-Propoxy)butyl, 2-(1-Methylethoxy)butyl, 2-(n-Butoxy)butyl, 2-(1-Methylpropoxy)butyl, 2-(2-Methylpropoxy)butyl, 2-(1,1- Dimethylethoxy)butyl, 3-(Methoxy)butyl, 3-(Ethoxy)butyl, 3-(n-Propoxy)butyl, 3-(1-Methylethoxy)butyl, 3-(n-Butoxy)butyl, 3-(1-Methylpropoxy)butyl, 3-(2-Methylpropoxy)butyl, 3-(1,1-Dimethylethoxy)butyl, 4-(Methoxy)butyl, 4-(Ethoxy)butyl, 4-(n-Propoxy)butyl, 4-(1-Methylethoxy)butyl, 4-(n-Butoxy)butyl, 4-(1-Methylpropoxy)butyl, 4-(2-Methylpropoxy)butyl oder 4-(1,1-Dimethylethoxy)butyl.

Reste R⁵ sind ferner z.B. Phenoxymethyl, 2-Phenoxyethyl, 2-oder 3-Phenoxypropyl, 2- oder 4-Phenoxybutyl, Formyloxymethyl, 2-(Formyloxy)ethyl, 2- oder 3-(Formyloxy)propyl, 2- oder 4-(Formyloxy)butyl, Methylcarbonyloxymethyl, 2-(Methylcarbonyloxy)ethyl, 2- oder 3-(Methylcarbonyloxy)propyl, 2- oder 4-(Methylcarbonyloxy)butyl, Ethylcarbonyloxymethyl, 2-(Ethylcarbonyloxy)ethyl, 2- oder 3-(Ethylcarbonyloxy)propyl, 2- oder 4-(Ethylcarbonyloxy)butyl, Propylcarbonyloxymethyl, 2-(Propylcarbonyloxy)ethyl, 2- oder 3-(Propylcarbonyloxy)propyl, 2- oder 4-(Propylcarbonyloxy)butyl, Cyclopentyl, Cyclohexyl oder Cycloheptyl.

Die Reste R⁵, R¹⁵ sowie die unten beschriebenen Reste G⁴ sind z.B. Formyl, Acetyl, Propionyl, Butyryl oder Isobutyryl.

Die Reste F¹, F², R⁵, R⁹, R¹⁰ sowie die unten beschriebenen Reste G⁴ sind beispielsweise Mono- oder Dimethylcarbamoyl, Mono- oder Diethylcarbamoyl, Mono- oder Dipropylcarbamoyl oder Mono- oder Dibutylcarbamoyl.

Reste F¹, F², R⁶, R⁷, R⁹, R¹⁰ sowie die unten beschriebenen Reste G³ und G⁵ können z.B. Methoxy, Ethoxy, Propoxy, Isopropoxy, Butoxy, sec-Butoxy, Isobutoxy oder tert-Butoxy sein.

Die Reste R⁶ und R¹³ sind beispielsweise Formylamino, Methylcarbonylamino, Ethylcarbonylamino, Propylcarbonylamino oder Iso-propylcarbonylamino.

Reste T¹ sind weiterhin z.B. 2-, 3- oder 4-Fluorphenyl, 2-, 3-oder 4-Chlorphenyl, 2-, 3- oder 4-Bromphenyl, 2-, 3- oder 4-Methoxyphenyl, 2-, 3- oder 4-Nitrophenyl, 2-, 3- oder 4-Carboxylphenyl, 2-, 3- oder 4-Acetylphenyl, 2-, 3- oder 4-Acetylaminophenyl, 2-, 3- oder 4-Methylsulfonylphenyl, 2-, 3- oder 4-Sulfamoylphenyl oder 2-, 3- oder 4-Carbamoylphenyl.

Die Reste F¹, F², R⁸, R⁹, R¹⁰, R¹⁵ sowie die unten beschriebenen Reste R¹⁶ sind ferner z.B. Methoxycarbonyl, Ethoxycarbonyl, Propoxycarbonyl, Isopropoxycarbonyl, Butoxycarbonyl, Isobutoxycarbonyl, sec-Butoxycarbonyl oder tert-Butoxycarbonyl.

Die Reste F² und R¹⁰ sind weiterhin beispielsweise Mono- oder Dimethylsulfamoyl, Mono- oder Diethylsulfamoyl, Mono- oder Dipropylsulfamoyl, Mono- oder Dibutylsulfamoyl, Methylsulfonyl, Ethylsulfonyl, Propylsulfonyl oder Butylsulfonyl.

Als Reste R¹³ kommen ferner in Betracht z.B. Hydroxysulfonylphenylmethyl, 2-Hydroxysulfonylphenylethyl, 2- oder 3-Hydroxysulfonylphenylpropyl, 2- oder 4-Hydroxysulfonylphenylbutyl, Aminomethyl, 2-Aminoethyl, 2- oder 3-Aminopropyl, 2- oder 4-Aminobutyl, Hydroxysulfonylmethyl, 2-Hydroxysulfonylethyl, 2-oder 3-Hydroxysulfonylpropyl, 2- oder 4-Hydroxysulfonylbutyl, Acetylaminomethyl, 2-Acetylaminoethyl, 2- oder 3-Acetylaminopropyl, 2- oder 4-Acetylaminobutyl, Benzoylaminomethyl, 2-Benzoylaminoethyl, 2- oder 3-Benzoylaminopropyl, 2- oder 4-Benzoylaminobutyl, 2-, 3- oder 4-Carboxyphenyl, 2-, 3- oder 4-Hydroxysulfonylphenyl, 2-, 3- oder 4-Benzoylaminophenyl, 2-, 3-oder 4-Acetylaminophenyl, 2-, 3- oder 4-Methylphenyl, 2-, 3- oder 4-Methoxyphenyl, 2-, 3- oder 4-Cyanophenyl, 2-, 3- oder 4-Chlorphenyl, Phenylamino, Methylamino, Ethylamino, Propylamino, Iso-propylamino, Butylamino, Isobutylamino, sec-Butylamino, tert-Butylamino oder Benzoylamino.

Die Reste L³ sowie die unten beschriebenen Reste L⁶ sind z.B. (CH₂)₂, (CH₂)₃, (CH₂)₄, CH(CH₃)CH₂, CH(CH₃)CH(CH₃), (CH₂)₅ oder (CH₂)₆.

Die Reste L³ sind weiterhin z.B. (CH₂)₂O(CH₂)₂, (CH₂)₃O(CH₂)₂, (CH₂)₂O(CH₂)₂O(CH₂)₂, (CH₂)₂S(CH₂)₂, (CH₂)₃S(CH₂)₂, (CH₂)₂S(CH₂)₂S(CH₂)₂, (CH₂)₂NH(CH₂)₂, (CH₂)₃NH(CH₂)₂, (CH₂)₂NH(CH₂)₂NH(CH₂)₂.

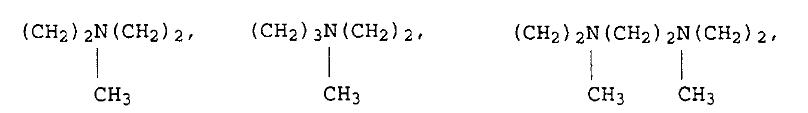

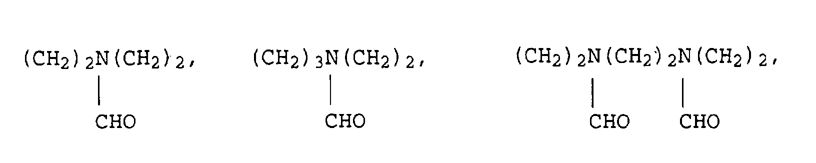

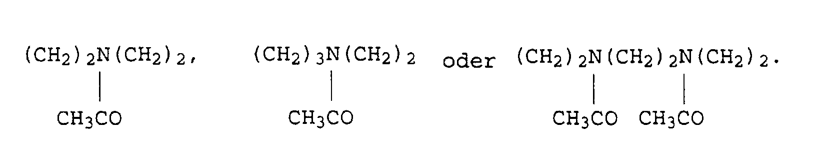

Die Reste L⁴ sind CH₂, (CH₂)₂, (CH₂)₃, (CH₂)₄, CH(CH₃)CH₂ oder CH(CH₃)CH(CH₃).

Im folgenden werden beispielhaft Kupplungskomponenten KH aufgeführt. Im einzelnen sind beispielsweise als Naphtholsulfonsäuren 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1,8-Dihydroxynaphthalin-3,6-disulfonsäure, 2,6-Dihydroxynaphthalin-8-sulfonsäure oder 2,8-Dihydroxynaphthalin-6-sulfonsäure zu nennen.

Weiterhin sind beispielsweise 1-Naphthylamin, N-Phenyl-1-naphthylamin, N-Ethyl-1-naphthylamin, N-Phenyl-2-naphthylamin, 1-Naphthol, 2-Naphthol, 1,5-Dihydroxynaphthalin, 1,6-Dihydroxynaphthalin, 1,7-Dihydroxynaphthalin oder 2,7-Dihydroxynaphthalin zu nennen.

Aminonaphthalinsulfonsäuren sind beispielsweise 1-Naphthylamin-6-sulfonsäure, 1-Naphthylamin-7-sulfonsäure, 1-Naphthylamin-8-sulfonsäure, 2-Naphthylamin-3,6-disulfonsäure, 2-Naphthylamin-5,7-disulfonsäure, 2-Naphthylamin-6,8-disulfonsäure, 2-Hydroxysulfonylmethylaminonaphthalin-5-sulfonsäure oder 2-Hydroxysulfonylmethylaminonaphthalin-6-sulfonsäure.

Als Aminonaphtholsulfonsäuren sind z.B. 1-Amino-5-hydroxynaphthalin-7-sulfonsäure, 1-Amino-8-hydroxynaphthalin-4-sulfonsäure, 1-Amino-8-hydroxynaphthalin-2,4-disulfonsäure, 1-Amino-8-hydroxynaphthalin-3,6-disulfonsäure, 1-Amino-8-hydroxynaphthalin-4,6-disulfonsäure, 2-Amino-5-hydroxynaphthalin-7-sulfonsäure, 2-Amino-8-hydroxynaphthalin-6-sulfonsäure, 2-Amino-8-hydroxynaphthalin-3,6-disulfonsäure, 2-Amino-5-hydroxynaphthalin-1,7-disulfonsäure, 3-Amino-7-hydroxysulfonylmethyl-8-hydroxynaphthalin-3,6-disulfonsäure, 2-Amino-7-hydroxysulfonylmethyl-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 1-Acetylamino-5-hydroxynaphthalin-7-sulfonsäure, 2-Methylamino-8-hydroxynaphthalin-6-sulfonsäure, 2-Hydroxysulfonylmethylamino-8-hydroxynaphthalin-6-sulfonsäure, 2-Hydroxysulfonylmethylamino-7-hydroxysulfonylmethyl-8-hydroxynaphthalin-6-sulfonsäure, 2-(3'- oder 4'-Hydroxysulfonylphenylamino)-8-hydroxynaphthalin-6-sulfonsäure, 2-Acetylamino-5-hydroxynaphthalin-7-sulfonsäure oder 2-Acetylamino-8-hydroxynaphthalin-6-sulfonsäure zu nennen.

Als Benzol-Kupplungskomponenten sind beispielsweise o- oder m-Toluidin, o- oder m-Anisidin, Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Ethylanilin, N-Ethyl-m-toluidin, N-(2-Hydroxyethyl)anilin oder N-(2-Hydroxyethyl)-m-to-luidin zu nennen.

Als Pyrazolon-Kupplungskomponenten sind beispielsweise 3-Methyl-, 3-Carboxy- oder 3-(C₁-C₄-Alkoxycarbonyl)pyrazol-5-one zu nennen, die in 1-Stellung Wasserstoff, gegebenenfalls durch Methyl, Ethyl, Fluor, Chlor, Brom, Trifluormethyl, Methoxy, Ethoxy, Cyano, Phenoxy, Phenylsulfonyl, Methylsulfonyl, Hydroxysulfonyl, Acetylamino, Nitro, Hydroxyl, Carboxyl, Carbamoyl oder Sulfamoyl substituiertes Phenyl oder durch Hydroxysulfonyl substituiertes 1- oder 2-Naphthyl tragen können. Beispielsweise sind 1-Phenyl-, 1-(2'-Chlorphenyl)-, 1-(2'-Methoxyphenyl)-, 1-(2'-Methylphenyl)-, 1-(1',5'-Dichlorphenyl)-, 1-(2',6'-Dichlorphenyl)-, 1-(2'-Methyl-6'-chlorphenyl)-, 1-(2'-Methoxy-5'-methylphenyl)-, 1-(2'-Methoxy-5'-hydroxysulfonylphenyl)-, 1-(2',5'-Dichlor-4'-hydroxysulfonylphenyl)-, 1-(2',5'-Dihydroxysulfonylphenyl)-, 1-(2'-Carboxyphenyl)-, 1-(3'-Hydroxysulfonylphenyl)-, 1-(4'-Hydroxysulfonylphenyl)- oder 1-(3'-Sulfamoylphenyl)-3-carboxylpyrazol-5-on, 1-(3'- oder 4'-Hydroxysulfonylphenyl)-, 1-(2'-Chlor-4'- oder -5'-hydroxysulfonylphenyl)-, 1-(2'-Methyl-4'-hydroxysulfonylphenyl)-, 1-(2',5'-Dichlorphenyl)-, 1-(4',8'-Dihydroxysulfonyl-1-naphthyl)- oder 1-(6'-Hydroxysulfonyl-1-naphthyl)-3-methylpyrazol-5-on, 1-Phenylpyrazol-5-on-3-carbonsäureethylester, Pyrazol-5-on-3-carbonsäureethylester oder Pyrazol-5-on-3-carbonsäure zu nennen.

Andere aus der Pyrazolreihe stammende Kupplungskomponenten sind beispielsweise 1-Methyl-, 1-Ethyl-, 1-Propyl-, 1-Butyl-, 1-Cyclohexyl-, 1-Benzyl- oder 1-Phenyl-5-aminopyrazol, 1-(4'-Chlorphenyl)-, 1-(4'-Methylphenyl)-5-aminopyrazol oder 1-Phenyl-3-methyl-5-aminopyrazol.

N-Arylacetoacetamide sind vor allem Acetessiganilid oder dessen im Phenylkern durch Chlor, Methyl, Ethyl, Methoxy, Ethoxy, Acetylamino, Hydroxylsulfonyl, Carboxyl, Carbamoyl oder Sulfamoyl ein- oder mehrfach substituierte Derivate.

Vom Pyridin abgeleitete Kupplungskomponenten sind beispielsweise die in der DE-A-2 260 827 beschriebenen Derivate.

Als Pyrimidinkupplungskomponenten sind z.B. die in der DE-A-2 202 820, DE-A-2 308 663 oder DE-A-3 119 349 aufgeführten Verbindungen geeignet. Weiterhin sind Barbitursäure und deren N-Substitutionsprodukte zu nennen. Als N-Substituenten kommen dabei insbesondere C₁-C₄-Alkyl oder Phenyl in Betracht.

Als Indolkupplungskomponenten sind beispielsweise 2-Methylindol, 2-Phenylindol, 2-Phenylindol-5-sulfonsäure, 1-Methyl-2-phenylindol, 1-(2'-Hydroxyethyl)-, 1-(2'-Carboxyethyl)-, 1-(2'-Carbamoylethyl)-2-methylindol oder -2-phenylindol zu nennen.

Als Pyridonkupplungskomponenten sind beispielsweise 1-Ethyl-2-hydroxy-4-methyl-5-carbamoylpyrid-6-on, 1-(2'-Hydroxyethyl)-2-hydroxy-4-methyl-5-carbamoylpyrid-6-on, 1-Phenyl-2-hydroxy-4-methyl-5-carbamoylpyrid-6-on, 1-Ethyl-2-hydroxy-4-methyl-5-cyanopyrid-6-on, 1-Ethyl-2-hydroxy-4-methyl-5-hydroxysulfonylmethylpyrid-6-on, 1-Methyl-2-hydroxy-4-methyl-5-cyanopyrid-6-on, 1-Methyl-2-hydroxy-5-acetylpyrid-6-on, 1,4-Dimethyl-2-hydroxy-5-cyanopyrid-6-on, 1,4-Dimethyl-5-carbamoylpyrid-6-on, 2,6-Dihydroxy-4-ethyl-5-cyanopyridin, 2-Hydroxy-4-ethyl-5-carbamoylpyrid-6-on, 1-Ethyl-2-hydroxy-4-methyl-5-hydroxysulfonylmethylpyrid-6-on; 1-Methyl-2-hydroxy-4-methyl-5-methylsulfonylpyrid-6-on oder 1-Carboxymethyl-2-hydroxy-4-ethyl-5-phenylsulfonylpyrid-6-on zu nennen.

Faserreaktivgruppenhaltige Kupplungskomponenten der Naphthalin-, Benzol-, Pyrazolon-, Aminopyrazol-, 2,6-Diaminopyridin-, Pyridon-, Hydroxypyrimidin-, Aminopyrimidin-, Indol- oder N-Arylacetoacetamidreihe sind beispielsweise Verbindungen der Formeln VIa-k 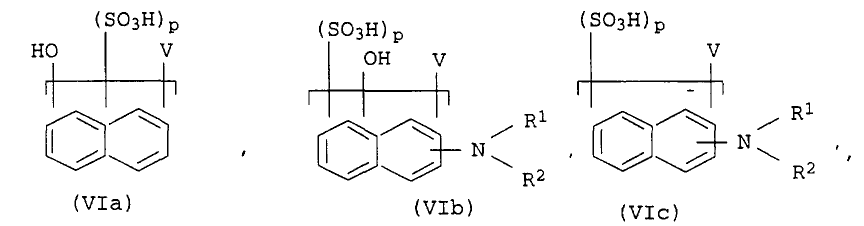 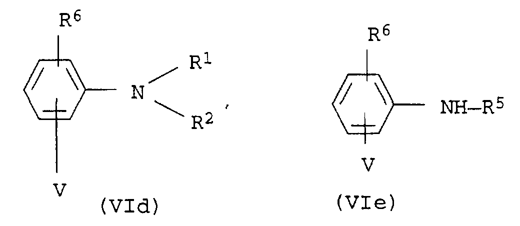 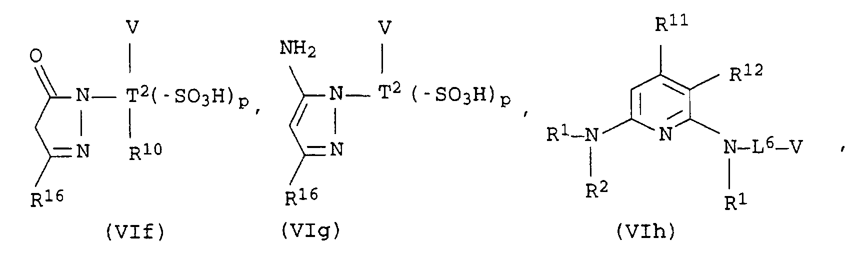 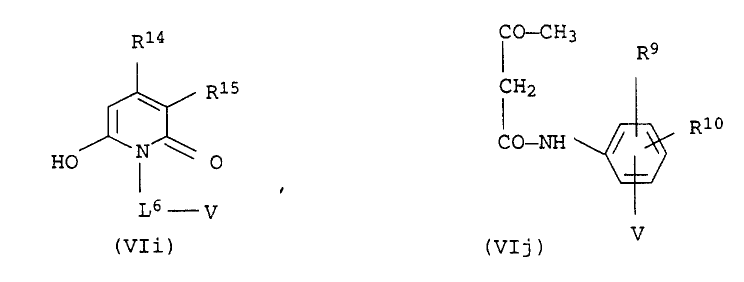 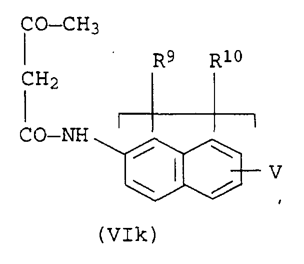 worin
T² für den Rest eines Benzol- oder Naphthalinrings,
R¹⁶ für Methyl, Carboxyl, C₁-C₄-Alkoxycarbonyl oder Phenyl und
L⁶ für C₁-C₆-Alkylen stehen und
R¹, R², R⁵, R⁶, R⁹, R¹⁰, R¹¹, R¹², R¹⁴, R¹⁵, p und V jeweils die obengenannte Bedeutung besitzen.

Faserreaktive Reste V tragende Pyrazolonkupplungskomponenten leiten sich beispielsweise von folgenden Pyrazolonen ab: 1-(3'-oder 4'-Aminophenyl)-, 1-(2'-Hydroxysulfonyl-5'-aminophenyl)- oder 1-(2'-Methoxy-5'-aminophenyl)- 3-carboxylpyrazol-5-on, 1-(3'- oder 4'-Aminophenyl)- oder 1-(6'-Amino-4',8'-dihydroxysulfonylnaphth-2'-yl)-3-carboxylpyrazol-5-on.

Besonders bevorzugt sind Reaktivfarbstoffe der Formel VII 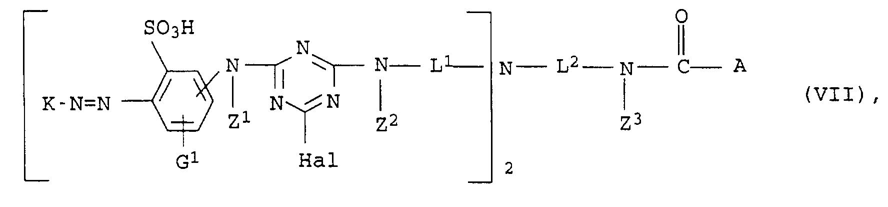 in der K den Rest einer Kupplungskomponente
- G¹: Wasserstoff, C₁-C₄-Alkyl, C₁-C₄-Alkoxy, Chlor oder Hydroxysulfonyl bedeutet und
- Z¹, Z², Z³, Hal, L¹, L² und A: jeweils die obengenannte Bedeutung besitzen.

Weiterhin besonders bevorzugt sind Reaktivfarbstoffe der Formel VIII 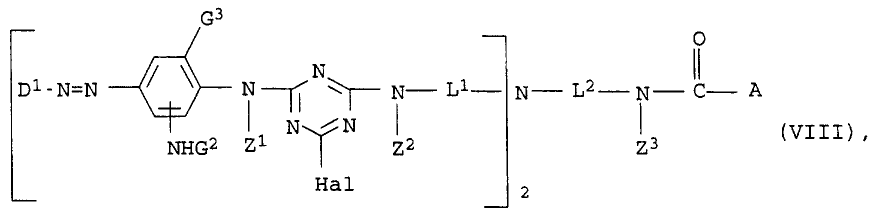 in der D¹, Z¹, Z², Z³, Hal, L¹, L² und A jeweils die obengenannte Bedeutung besitzen,
- G²: für C₁-C₄-Alkanoyl, Carbamoyl, Mono- oder Di-(C₁-C₄)-alkylcarbamoyl, Phenylcarbamoyl oder Cyclohexylcarbamoyl und
- G³: für Wasserstoff, C₁-C₄-Alkyl, C₁-C₄-Alkoxy, Hydroxysulfonyl oder Chlor stehen.

Weiterhin besonders bevorzugt sind Reaktivfarbstoffe der Formel IX 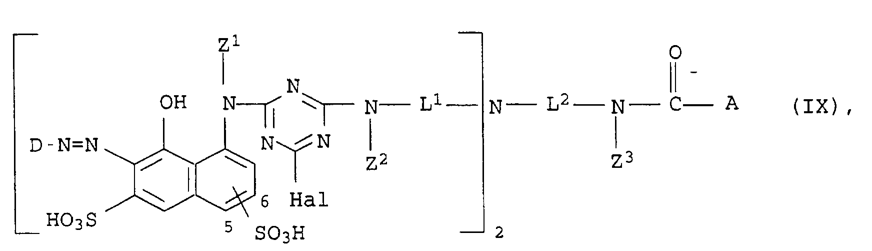 in der D, Z¹, Z², Z³, Hal, L¹, L² und A jeweils die obengenannte Bedeutung besitzen und die Hydroxysulfonylgruppe in Ringposition 5 oder 6 steht.

Weiterhin besonders bevorzugt sind Reaktivfarbstoffe der Formel X 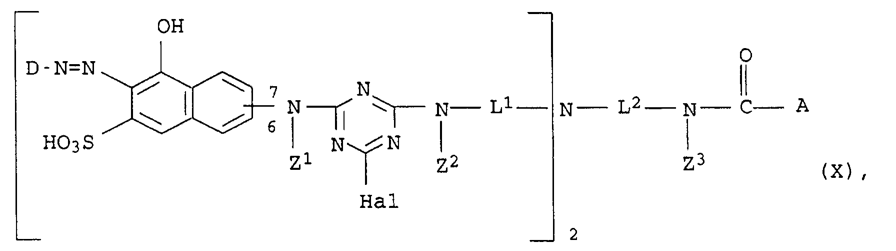 in der D, Z¹, Z², Z³, Hal, L¹, L² und A jeweils die obengenannte Bedeutung besitzen und die Iminotriazingruppe in Ringposition 6 oder 7 steht.

Weiterhin sind wertvolle Verbindungen solche der Formel XI 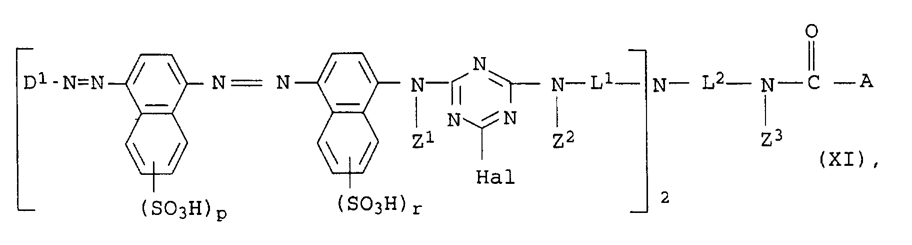 in der D¹, Z¹, Z², Z³, Hal, L¹, L² und A jeweils die obengenannte Bedeutung besitzen und p und r unabhängig voneinander jeweils für 0, 1 oder 2 stehen.

Weiterhin wertvolle Verbindungen sind solche der Formel XII 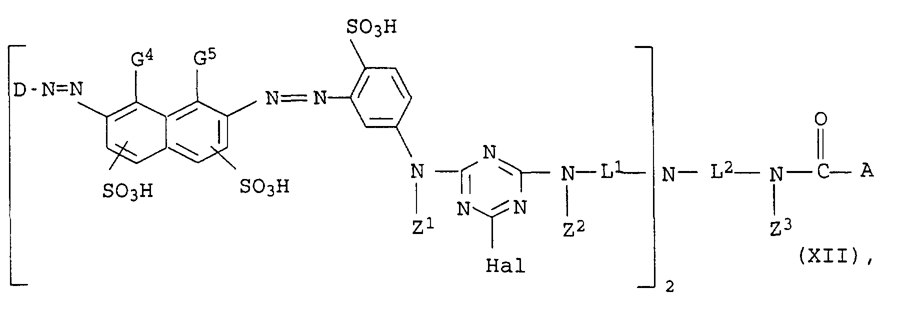 in der D, Z¹, Z², Z³, Hal, L¹, L² und A die obengenannte Bedeutung besitzen und einer der Reste G⁴ und G⁵ Amino und der andere Hydroxy bedeutet.

Anstelle der Azofarbstoffreste können die Farbstoffe der Formel I auch entsprechende Metallkomplexazofarbstoffreste enthalten. Als komplexierende Metalle kommen dabei insbesondere Kupfer, Kobalt Chrom, Nickel oder Eisen in Betracht, wobei Kupfer, Kobalt oder Chrom bevorzugt sind.

Dabei befinden sich die metallisierten Gruppen vorzugsweise jeweils in ortho-Stellung zur Azogruppe, z. B. in Form von o,o'-Dihydroxy-, o-Hydroxy-o'-carboxy-, o-Carboxy-o'-amino- oder o-Hydroxy-o'-amino-azogruppierungen.

Chr in Formel I stellt weiterhin z.B. den Rest eines metallisierten Formazanfarbstoffs dar, wobei insbesondere Kupferformazane zu nennen sind. Kupferformazane sind an sich bekannt und beispielsweise in K. Venkataraman "The Chemistry of Synthetic Dyes", Vol. III, Academic Press, New York, London, 1970, beschrieben.

Besonders bevorzugt sind Kupfer-Formazanfarbstoffe der Formel XIII 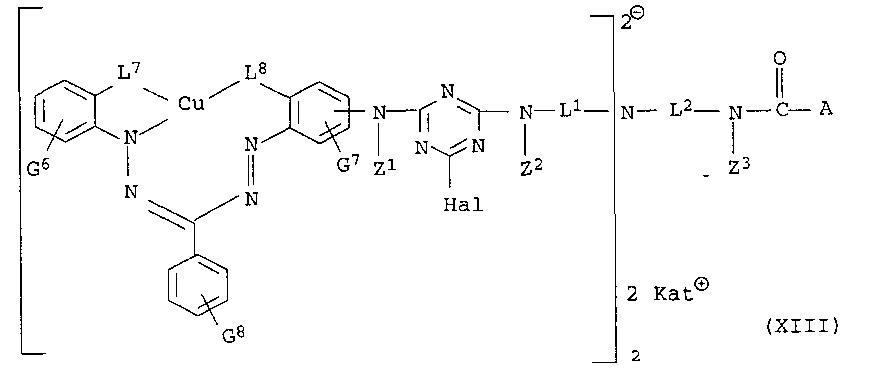 in der einer der Reste L⁷ und L⁸ Sauerstoff und der andere Carboxyl bedeuten,
- Kat^{⊕}: das Äquivalent eines Kations ist,
- G⁶, G⁷ und G⁸: unabhängig voneinander Wasserstoff oder Hydroxysulfonyl bedeuten und
- Z¹, Z², Z³, Hal, L¹, L² und A: jeweils die obengenannte Bedeutung besitzen.

Kat^{⊕} in Formel XIII stellt das Äquivalent eines Kations dar. Es ist entweder ein Proton oder leitet sich von Metall- oder Ammoniumionen ab. Metallionen sind insbesondere die Lithium-, Natrium- oder Kaliumionen. Unter Ammoniumionen im erfindungsgemäßen Sinne sind die bereits oben genannten unsubstituierten oder substituierten Ammoniumkationen zu verstehen.

Besonders als Kationen hervorzuheben sind Protonen oder Lithium-, Natrium- oder Kaliumionen, wobei die genannten Metallkationen auch bevorzugte Kationen sind, wenn die Reaktivfarbstoffe XIII in Salzform vorliegen.

Eine Methode zur Herstellung der diesen Farbstoffen zugrundeliegenden-Formazane ist beispielsweise in der EP-A-315 046 beschrieben.

Chr in Formel I stellt weiterhin z.B. den Rest eines Anthrachinonfarbstoffs dar. Anthrachinone sind an sich bekannt und beispielsweise in K. Venkataraman "The Chemistry of Synthetic Dyes", Vol. II, Academic Press, New York, 1952, beschrieben.

Besonders bevorzugt sind Anthrachinonfarbstoffe der Formel XIV 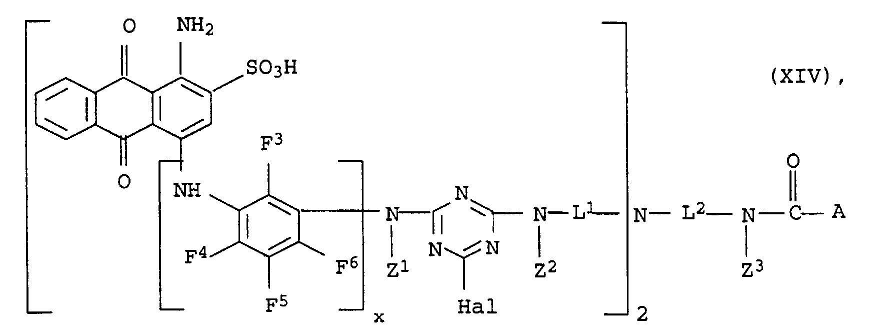 worin Z¹, Z², Z³, Hal, L¹, L² und A jeweils die obengenannte Bedeutung besitzen,
- x: 0 oder 1
- F³ und F⁴: unabhängig voneinander jeweils Wasserstoff oder Methyl
und einer der beiden Reste F⁵ und F⁶ Wasserstoff oder Methyl und der andere Hydroxysulfonyl bedeuten.

Chr in Formel I stellt weiterhin z.B. den Rest eines Triphendioxazinfarbstoffs dar. Triphendioxazine sind an sich bekannt und beispielsweise in der EP-A-141 359 oder EP-A-311 969 beschrieben.

Besonders bevorzugt sind Triphendioxazinfarbstoffe der Formel XV 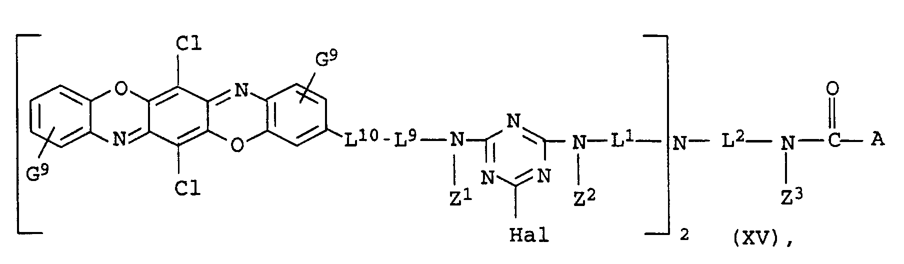 in der Z¹, Z², Z³, Hal, L¹, L² und A jeweils die obengenannte Bedeutung besitzen und
- G⁹: für Hydroxysulfonyl oder den Rest SO₂-C₂H₄-SO₃H,
- L⁹: für C₂-C₄-Alkylen oder Phenylen und
- L¹⁰: für Sauerstoff, Imino oder C₁-C₄-Alkylimino stehen.

Chr in Formel I stellt weiterhin z.B. den Rest eines metallisierten Phthalocyaninfarbstoffs dar. Phthalocyanine sind an sich bekannt und beispielsweise in F.H. Moser, D.L. Thomas "The Phthalocyanines", Vol. II, CRC Press, Boca Raton, Florida 1983, beschrieben.

Besonders bevorzugt sind Phthalocyaninfarbstoffe der Formel XVI 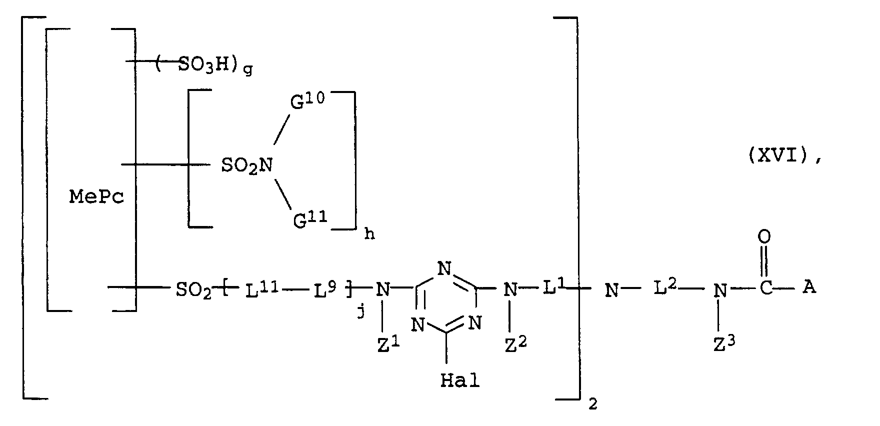 in der
- Pc: den Phthalocyaninrest,
- G¹⁰ und G¹¹: unabhängig voneinander jeweils Wasserstoff oder C₁-C₄-Alkyl,
- L¹¹: Imino oder C₁-C₄-Alkylimino,
- Me: Kupfer oder Nickel,
- g: 0, 1 oder 2,
- h: 0, 1 oder 2
- j: 0, 1, 2 oder 3 bedeuten
und Z¹, Z², Z³, Hal, L¹, L², L⁹ und A jeweils die obengenannte Bedeutung besitzen.

Bevorzugt werden verdoppelte Reaktivfarbstoffe der allgemeinen Formel I sowie besonders der Formel VII - XVI, in der Z¹ und Z² Wasserstoff bedeuten.

Weiterhin werden verdoppelte Reaktivfarbstoffe der Formeln I sowie besonders VII - XVI bevorzugt, in der L¹ und L² die gleiche Bedeutung haben.

Ferner werden verdoppelte Reaktivfarbstoffe der Formeln I sowie besonders VII - XVI bevorzugt, in der A für Methyl, Ethyl oder C₁-C₆-Alkoxy insbesondere für Methyl, Ethyl, Methoxy und Ethoxy steht.

Daneben werden Verbindungen der Formel I sowie Verbindungen der bevorzugten Formeln VII - XVI besonders bevorzugt, in denen die Sustituenten aus einer Kombination der oben aufgeführten bevorzugten Substituenten ausgewählt sind.

Die vorliegende Erfindung betrifft weiterhin Mischungen der verdoppelten Reaktivfarbstoffe der allgemeinen Formel I mit Reaktivfarbstoffen der allgemeinen Formel XVII 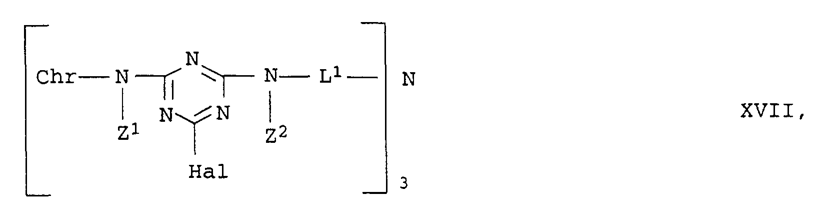 in der
Chr, Z¹, Z², L¹ und Hal die oben angegebene Bedeutung haben. Diese Mischungen enthalten bezogen auf 1 Gewichtsteil des verdoppelten Reaktivfarbstoffs I 10 bis 100 Gewichtsteile des verdreifachten Reaktivfarbstoffs XVII.

Die Farbstoffe der Formel I können andere Chromophore sowie andere Reste Z¹, Z², L¹ und Hal tragen als die Farbstoffe der Formel XVII. Bevorzugt werden jedoch Mischungen mit gleichen Substituentenbedeutungen.

Die erfindungsgemäßen Mischungen können weiterhin 0,1 bis 30 Gewichtsteile eines oder mehrerer roten, orangen, gelben oder blauen Farbstoffs bezogen auf 1 Gewichtsteil verdoppelten Reaktivfarbstoff I enthalten.

Geeignete gelbe Reaktivfarbstoffe sind z.B. in der US-A-5 182 371 beschrieben. Weiterhin sind folgende Farbstoffe zu nennen: C.I. Reactive Yellow 145, C.I. Reactive Yellow 168 oder C.I. Reactive Yellow 176.

Geeignete orange Reaktivfarbstoffe gehorchen z.B. den Formeln 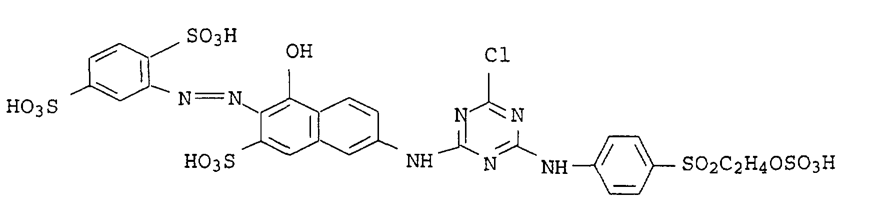 oder

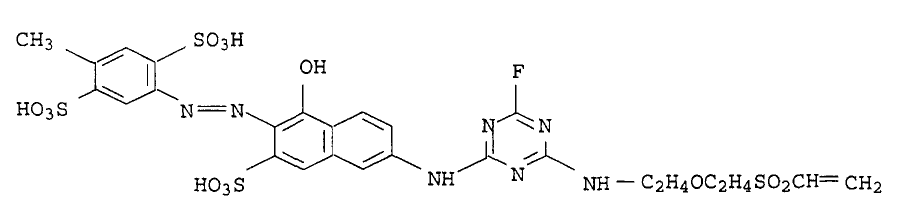

Weiterhin sind folgende Farbstoffe zu nennen: C.I. Reactive Orange 7 (17 756), C.I. Reactive Orange 15, C.I. Reactive Orange 16 (17 757), C.I. Reactive Orange 56, C.I. Reactive Orange 57, C.I. Reactive Orange 72 (17 754), C.I. Reactive Orange 74, C.I. Reactive Orange 82, C.I. Reactive Orange 83 oder C.I. Reactive Orange 90.

Geeignete rote Reaktivfarbstoffe sind z.B. in der US-A-5 200 511 beschrieben. Weiterhin sind folgende Farbstoffe zu nennen: C.I. Reactive Red 35, C.I. Reactive Red 103, C.I. Reactive Red 113, C.I. Reactive Red 180, C.I. Reactive Red 194, C.I. Reactive Red 195, C.I. Reactive Red 198, C.I. Reactive Red 222, C.I. Reactive Red 223, C.I. Reactive Red 227, C.I. Reactive Red 228 oder C.I. Reactive Red 239.

Geeignete Farbstoffe gehorchen insbesondere der Formel XVIII 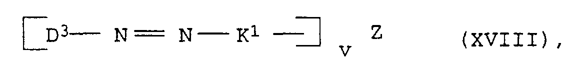 in der
- v: 1 oder 2,
- K¹: einen Rest der Formel 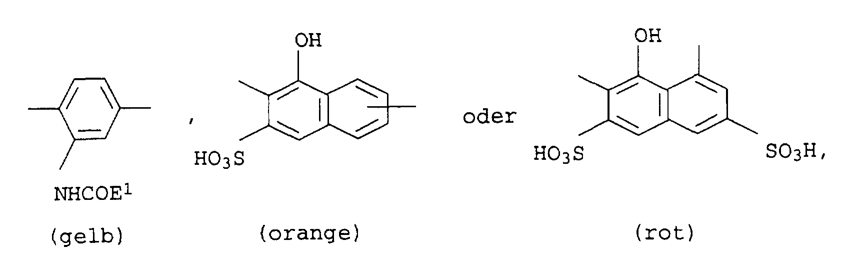 worin jeweils der linke Bindungsstrich die Bindung zur Azobrücke darstellt,
- E¹: für C₁-C₄-Alkyl, das gegebenenfalls durch Hydroxy substituiert ist, Phenyl, Amino, oder einen Rest der Formel

NH― L¹²― SO₂― C₂H₄ ― Q,
- D³: einen Benzol- oder Naphthalinrest, der jeweils einen Reaktivanker aufweisen kann und gegebenenfalls ein- bis dreifach durch C₁-C₄-Alkyl, C₁-C₄-Alkoxy, Hydroxy oder Hydroxysulfonyl substituiert ist, und
- Z: C₁-C₄-Alkanoylamino, das gegebenenfalls durch Carboxyl substituiert ist, Benzoylamino oder einen Rest der Formel 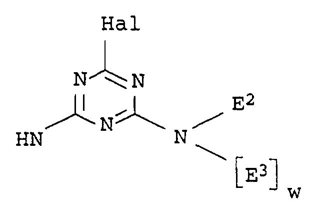 bedeuten,
worin
- w: für 0 oder 1,
- Hal: für Fluor oder Chlor,
- E²: für Wasserstoff oder C₁-C₄-Alkyl, das durch ein Sauerstoffatom in Etherfunktion unterbrochen sein kann und gegebenenfalls durch Hydroxy substituiert ist, und
- E³: für ein- oder zweifach durch Hydroxysulfonyl substituiertes Phenyl oder einen Rest der Formel 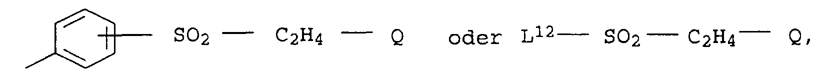 wobei Q jeweils die obengenannte Bedeutung und L¹² jeweils die Bedeutung von C₂-C₄-Alkylen, das durch 1 Sauerstoffatom in Etherfunktion unterbrochen sein kann, besitzen.

Geeignete blaue Reaktivfarbstoffen sind z.B. C.I. Reactive Blue 171, C.I. Reactive Blue 160, C.I. Reactive Blue 191, C.I. Reactive Blue 198, C.I. Reactive Blue 211, C.I. Reactive Blue 71 oder Reactive Black 5.

Die Einzelfarbstoffe der neuen Farbstoffmischungen sind bekannt und nach dem Fachmann geläufigen Herstellungsverfahren zugänglich. Einige, wie beispielsweise Reactive Black 5 sind handelsüblich. Die neuen Farbstoffmischungen sind durch mechanisches Mischen der Einzelkomponenten zugänglich.

Die erfindungsgemäßen Farbstoffe sind durch Umsetzung etwa 2 Moläquivalente einer Verbindung der allgemeinen Formel XIX 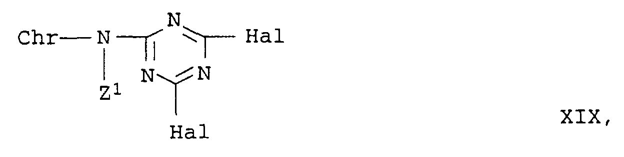 mit einem Moläquivalent eines Polyamins der Formel XIX 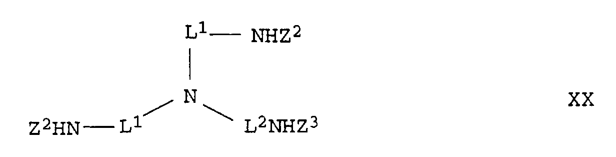 und anschließender Acylierung oder Überführung in die Kohlensäureester oder Amide erhältlich.

Die Acylierung wird vorteilhaft durch Anhydride oder Säurechloride erzielt. Als geeignete Carbonsäuren, von denen die Anhydride oder Säurechlorid abstammen, sind beispielshaft zu nennen: Ameisensäure, Essigsäure, Chlorpropionsäure, Chloressigsäure, Nitrobenzoesäure, Maleinsäure oder Bernsteinsäure.

Als bevorzugte Kohlensäurederivate sind Chlorkohlensäuremethylester, -ethylester oder -phenylester zu nennen.

Die Umsetzung von Halogentriazin mit Aminen ist allgemein bekannt und wird in der Regel bei pH 5-8 sowie Temperaturen von 10 bis 50°C durchgeführt.

Die anschließende Acylierung oder Überführung in die Kohlensäureester oder -amide geschieht im allgemeinen bei pH 5-8 in Gegenwart von Alkalihydroxiden wie Natrium- oder Kaliumhydroxid oder Alkalicarbonaten. Üblicherweise wird auch diese Reaktion bei 10-50°C durchgeführt. In der Regel ist die Umsetzung nach 2-3 Stunden beendet.

Die erfindungsgemäßen Farbstoffe fallen nach dem beschriebenen Verfahren in einer Reinheit an, die zusätzliche Reinigungsschritte wie Filtration oder Aussalzen unnötig macht und direkt die Sprühtrocknung ermöglicht.

Durch Veränderung der Stöchiometrie von XIX zu XX zu einem 3:1 Verhältnis erhöht sich der Anteil des verdreifachten Reaktivfarbstoffes XVII. Während man bei 1:1 Stöchiometrie das Trimer lediglich als Nebenprodukt erhält, gelangt man ab 2:1 Moläquivalenten Verbindung XIX bezogen auf 1 Moläquivalent Polyamin zu den erfindungsgemäßen Mischungen.

Die neuen Reaktivfarbstoffe der Formel I sowie ihre erfindungsgemäßen Mischungen eignen sich in vorteilhafter Weise zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Weiterhin eignen sich die Farbstoffe und ihre Mischungen zum Bedrucken von Papier und Textilien mit Inkjet-Tinten. In den Tinten liegt der Farbstoff in wäßriger Lösung, gegebenenfalls im Gemisch mit wasserlöslichen organischen Lösungsmittel vor. Die erfindungsgemäßen Farbstoffe können auch zum Färben von keratinischen Fasern, z.B. bei der Haarfärbung oder der Färbung von Pelzen, verwendet werden. Vorzugsweise eignen sich die neuen Farbstoffe zum Färben und Bedrucken von Textilmaterial auf der Basis von Wolle oder insbesondere von Baumwolle.

Insbesondere auf Substraten auf Basis von Cellulose werden farbstarke Färbungen mit sehr hoher Fixierausbeute erhalten, die eine sehr gute Lichtechtheit sowie vorzügliche Naßechtheiten, wie Wasch-, Chlorbleich-, Peroxidbleich-, Alkali-, Meerwasser- oder Schweißechtheit, aufweisen.

Die folgenden Beispiele sollen die Erfindung näher erläutern.

### Beispiel 1

a) 62 g 1-Hydroxy-2-(1-sulfonaphthyl-2-azo)-8-aminonaphthalin-3,6-disulfonsäure wurden in 250 ml Wasser gelöst. Bei 5 - 7 °C trug man 11,6 g Cyanurchlorid ein und hielt den pH-Wert mit 10 gew.-%iger Lithiumhydroxydlösung bei 6 (Verbrauch 55 g). Dann wurden 5,84 g Trisaminoethylamin zugegeben, der pH-Wert mit Lithiumhydroxyd bei 8,5 gehalten und die Temperatur innerhalb 30 Minuten auf 60 °C erhöht. Nach 4 Stunden kühlte man auf 20 - 25 °C ab, stellte den pH-Wert mit verd. Salzsäure auf 6,5 und gab 200 g Aceton zu. Nach Absaugen und Trocknen bei 40 °C isolierte man 53 g der Verbindung. 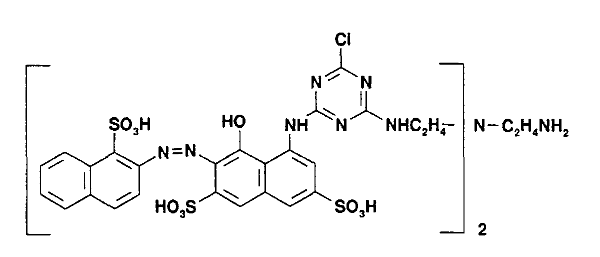 λₘₐₓ (in Wasser): 516 nm, Schulter bei 548 nm
b) 11,6 g der unter a) hergestellten Verbindung wurden in 250 ml Wasser gelöst. Bei pH 6,5 und 20 - 25 °C gab man in einem Zeitraum von 2 Stunden 6 g Bernsteinsäureanhydrid zu. Nach weiteren 4 Stunden wurde im Vakuum etwa die Hälfte des Wasser abdestilliert. Der Kristallbrei wurde mit 200 g i-Propanol aufgerührt und abgesaugt. Man isolierte nach Trocknen 13 g der Verbindung der Formel 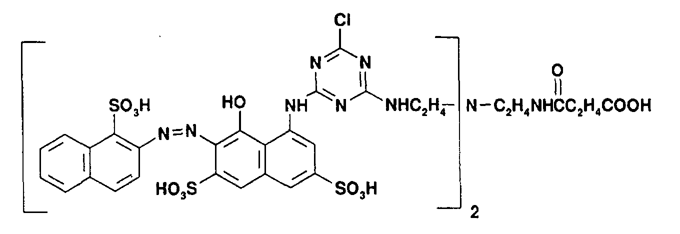 λₘₐₓ (in Wasser): 514 nm, Schulter 548 nm

Im Massenspektrum (ESJ) wird der Molpeak mit der Masse 1574 detektiert.

### Beispiel 2

Man arbeitete wie in Beispiel 1, setzte aber unter b) anstelle des Bernsteinsäureanhydrids 6 g Acetanhydrid zu.

Man isolierte nach Trocknen 12 g der Verbindung der Formel 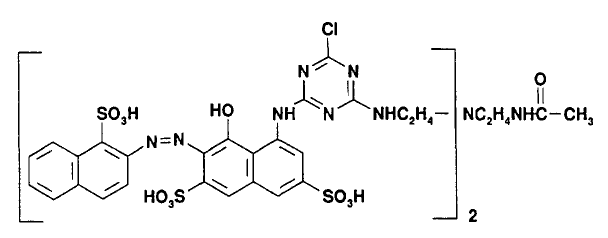 λₘₐₓ (in Wasser): 516 nm, Schulter 546 nm

### Beispiel 3

Man arbeitete wie in Beispiel 1, setzte aber unter b) anstelle des Bernsteinsäureanhydrids 5,6 g 3-Nitrobenzoylchlorid gelöst in 15 g Aceton zu. Der pH-Wert wurde mit 5 gew.-%ger Lithiumhydroxydlösung bei 5,0 gehalten.

Man isolierte nach Trocknung 12 g der Verbindung der Formel 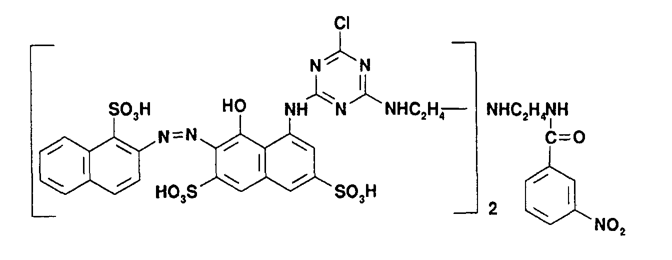 λₘₐₓ (in Wasser): 518 nm, Schulter 548 nm

### Beispiel 4

Man arbeitete wie in Beispiel 1, setzte aber unter b) anstelle des Bernsteinsäureanhydrids 6,3 g Chlorameisensäurephenylester ein. Nach Trocknen isoliert man 10 g der Verbindung. 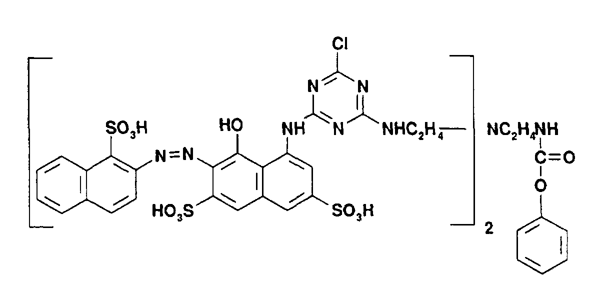 λₘₐₓ (in Wasser): 518 nm, Schulter 548 nm

### Beispiel 5

Man arbeitete wie in Beispiel 1, setzte aber nur 2,7 g Trisaminoethylamin zu. Nach beendeter Reaktion und pH-Stellung auf 6,5 tropfte man bei 40°C 5 g Acetanhydrid zu. Nach 2 Stunden ließ man auf Raumtemperatur abkühlen. Das Reaktionsgemisch wurde ultrafiltriert und sprühgetrocknet. Nach HPLC-Analyse enthält es 0,8 % des Farbstoffs aus Beispiel 1a), 9 % des Farbstoffs aus Beispiel 2 und 90 % des Farbstoffs der Formel

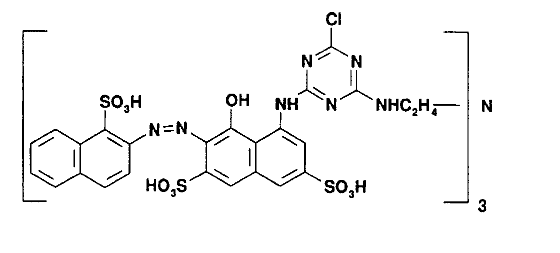

## Patentansprüche

1. Verdoppelte Reaktivfarbstoffe der allgemeinen Formel I 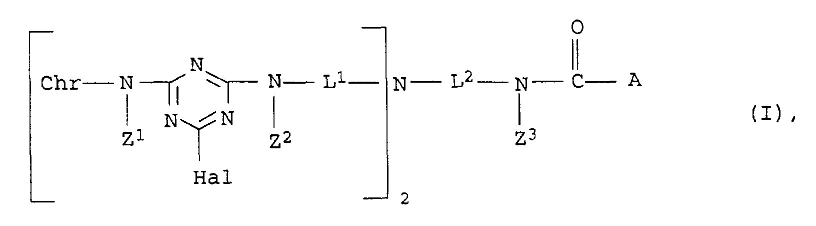 in der
Chr den Rest eines Chromophors, der gegebenenfalls weitere faserreaktive Gruppen aufweist und der sich von einem gegebenenfalls metallisierten Mono- oder Disazofarbstoff, einem Triphendioxazin, einem Anthrachinon, einem metallisierten Formazan oder einem metallisierten Phthalocyanin ableitet,
Z¹, Z² und Z³ unabhängig voneinander für Wasserstoff, oder gegebenenfalls substituiertes C₁-C₆-Alkyl,
Hal Fluor oder Chlor
L¹ und L² unabhängig voneinander C₂-C₆-Alkylen, das durch 1 oder 2 nichtbenachbarte Sauerstoffatome unterbrochen sein kann, und
A Wasserstoff, gegebenenfalls substituiertes C₁-C₆-Alkyl, gegebenenfalls substituiertes Phenyl, gegebenenfalls substituiertes C₂-C₃-Alkenyl, gegebenenfalls substituiertes C₁-C₆-Alkoxy, gegebenenfalls substituiertes Phenoxy oder C₁-C₆-Alkylamino bedeuten.

2. Verdoppelte Reaktivfarbstoffe nach Anspruch 1, **dadurch gekennzeichnet, daß** Z¹ und Z² Wasserstoff bedeuten.

3. Verdoppelte Reaktivfarbstoffe nach den Ansprüchen 1 oder 2, **dadurch gekennzeichnet, daß** L¹ und L² die gleiche Bedeutung haben.

4. Verdoppelte Reaktivfarbstoffe nach den Ansprüchen 1 bis 3, **dadurch gekennzeichnet, daß** A Methyl, Ethyl oder C₁-C₆-Alkoxy bedeutet.

5. Verdoppelte Reaktivfarbstoffe nach den Ansprüchen 1 bis 4, **dadurch gekennzeichnet, daß** A Methyl, Ethyl, Methoxy oder Ethoxy bedeutet.

6. Mischungen, enthaltend bezogen auf 1 Gewichtsteil verdoppelte Reaktivfarbstoffe der allgemeinen Formel I gemäß Anspruch 1 10 bis 100 Gewichtsteile Farbstoffe der allgemeinen Formel XVII 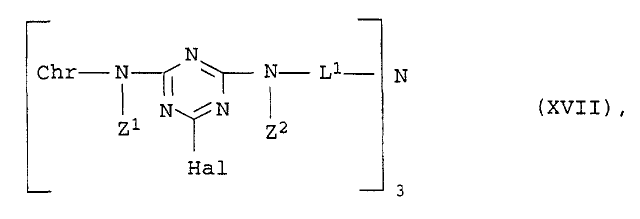 in der
Chr, Z¹, Z², Hal und L¹, die in Anspruch 1 angegebene Bedeutung haben.

7. Mischungen nach Anspruch 6, **dadurch gekennzeichnet, daß** Chr, Z¹, Z², Hal und L¹ in Formel I und XVII die gleiche Bedeutung haben.

8. Mischungen nach den Ansprüchen 6 oder 7 enthaltend weiterhin 0,1 bis 30 Gewichtsteile eines roten, orangen, gelben oder blauen Farbstoffs, bezogen auf 1 Gewichtsteil verdoppelte Reaktivfarbstoffe I.

9. Verfahren zur Herstellung von Mischungen gemäß den Ansprüchen 6 oder 7, **dadurch gekennzeichnet, daß** man 2 bis 3 Moläquivalente einer Verbindung der Formel XIX 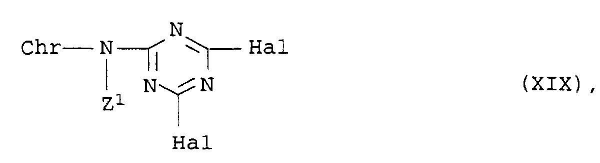 mit einem Moläquivalenten eines Polyamins der Formel XX 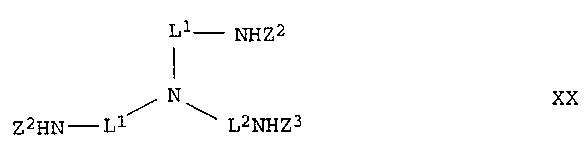 umsetzt und die anschließend noch in der Reaktionsmischung enthaltenen NHZ³-Gruppen acyliert oder in Kohlensäureester oder -amide überführt.

10. Verwendung der Reaktivfarbstoffe oder ihrer Mischungen gemäß den Ansprüchen 1 bis 9 zum Färben oder Bedrucken von Hydroxygruppen oder Stickstoffatome aufweisenden Substraten.

## Claims

1. Doubled reactive dyes of the general formula I 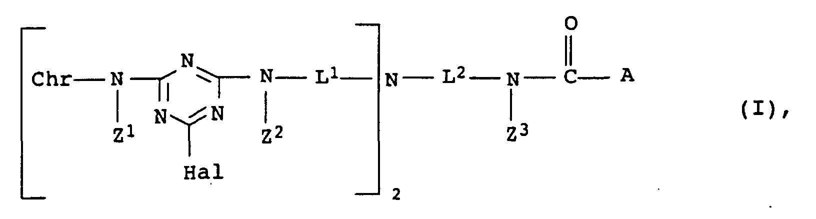 where
Chr is a chromophore residue with or without further fiber-reactive groups and derived from a metallized or unmetallized mono- or disazo dye, from a triphendioxazine, from an anthraquinone, from a metallized formazan or from a metallized phthalocyanine,
Z¹, Z² and Z³ are each independently of the others hydrogen or substituted or unsubstituted C₁-C₆-alkyl,
Hal is fluorine or chlorine,
L¹ and L² are each independently of the other C₂-C₆-alkylene with or without interruption by 1 or 2 unadjacent oxygen atoms, and
A is hydrogen, substituted or unsubstituted C₁-C₆-alkyl, substituted or unsubstituted phenyl, substituted or unsubstituted C₂-C₃-alkenyl, substituted or unsubstituted C₁-C₆-alkoxy, substituted or unsubstituted phenoxy or C₁-C₆-alkylamino.

2. Doubled reactive dyes as claimed in claim 1, wherein Z¹ and Z² are each hydrogen.

3. Doubled reactive dyes as claimed in claim 1 or 2, wherein L¹ and L² are identical.

4. Doubled reactive dyes as claimed in any of claims 1 to 3, wherein A is methyl, ethyl or C₁-C₆-alkoxy.

5. Doubled reactive dyes as claimed in any of claims 1 to 4, wherein A is methyl, ethyl, methoxy or ethoxy.

6. Mixtures comprising, based on 1 part by weight of doubled reactive dyes of the general formula I as claimed in claim 1, from 10 to 100 parts by weight of dye of the general formula XVII 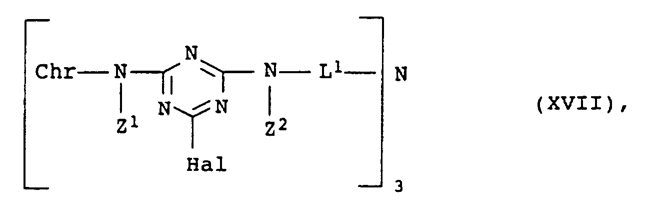 where
Chr, Z¹, Z², Hal and L¹ are each as defined in claim 1.

7. Mixtures as claimed in claim 6, wherein Chr, Z¹, Z², Hal and L¹ are identical in the formula I and in the formula XVII.

8. Mixtures as claimed in claim 6 or 7, further comprising from 0.1 to 30 parts by weight of a red, orange, yellow or blue dye, based on 1 part by weight of doubled reactive dyes I.

9. A process for preparing mixtures as claimed in claim 6 or 7, which comprises reacting from 2 to 3 mol equivalents of a compound of the formula XIX 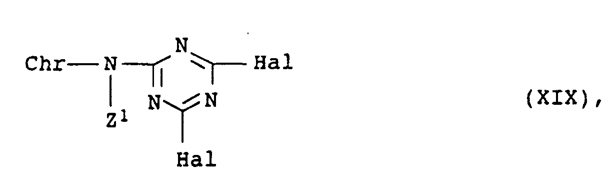 with one mole equivalent of a polyamine of the formula XX 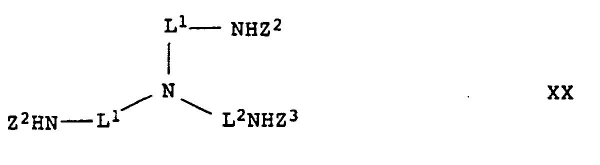 and subsequently acylating the NHZ³ groups still present in the reaction mixture or converting them into carbonic esters or amides.

10. The use of the reactive dyes or their mixtures of any of claims 1 to 9 for dyeing or printing hydroxyl-containing or nitrogenous substrates.

## Revendications

1. Colorants réactifs doubles de formule générale I 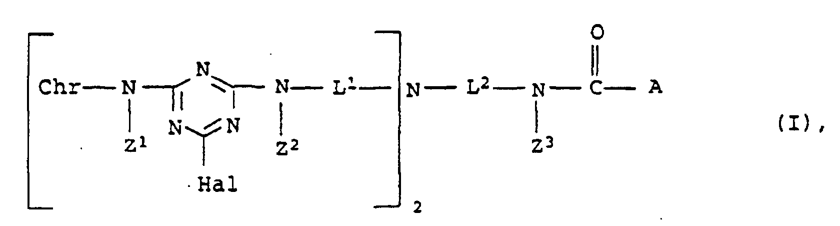 dans laquelle
Chr représente le reste d'un chromophore qui comporte éventuellement d'autres groupes réactifs avec les fibres et qui dérive d'un colorant mono- ou disazoïque éventuellement métallé, d'une triphénodioxazine, d'une anthraquinone, d'un formazan métallé ou d'une phtalocyanine métallée,
Z¹, Z² et Z³ représentent, indépendamment les uns des autres, un atome d'hydrogène ou un groupe alkyle en C₁-C₆ éventuellement substitué,
Hal représente un atome de fluor ou de chlore,
L¹ et L² représentent, indépendamment l'un de l'autre, un groupe alkylène en C₂-C₆ qui peut être interrompu par 1 ou 2 atomes d'oxygène non contigus, et
A représente un atome d'hydrogène, un groupe alkyle en C₁-C₆ éventuellement substitué, un groupe phényle éventuellement substitué, un groupe alcényle en C₂-C₃ éventuellement substitué, un groupe alcoxy en C₁-C₆ éventuellement substitué, un groupe phénoxy éventuellement substitué ou un groupe alkyl(C₁-C₆)amino.

2. Colorants réactifs doubles selon la revendication 1, **caractérisés en ce que** Z¹ et Z² représentent un atome d'hydrogène.

3. Colorants réactifs doubles selon la revendication 1 ou 2, **caractérisés en ce que** L¹ et L² ont la même signification.

4. Colorants réactifs doubles selon les revendications 1 à 3, **caractérisés en ce que** A représente le groupe méthyle, éthyle ou un groupe alcoxy en C₁-C₆.

5. Colorants réactifs doubles selon les revendications 1 à 4, **caractérisés en ce que** A représente le groupe méthyle, éthyle, méthoxy ou éthoxy.

6. Mélanges contenant, par rapport à 1 partie en poids de colorants réactifs doubles de formule générale I selon la revendication 1, 10 à 100 parties en poids de colorants de formule générale XVII 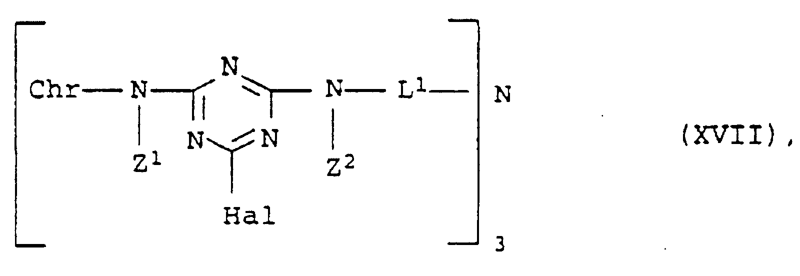 dans laquelle
Chr, Z¹, Z², Hal et L¹ ont les significations données dans la revendication 1.

7. Mélanges selon la revendication 6, **caractérisés en ce que** Chr, Z¹, Z², Hal et L¹ ont les mêmes significations dans la formule I et dans la formule XVII.

8. Mélanges selon la revendication 6 ou 7, contenant en outre 0,1 à 30 parties en poids d'un colorant rouge, orangé, jaune ou bleu, par rapport à 1 partie en poids de colorants réactifs doubles I.

9. Procédé pour la préparation de mélanges selon la revendication 6 ou 7, **caractérisé en ce qu'**on fait réagir 2 à 3 équivalents molaires d'un composé de formule XIX 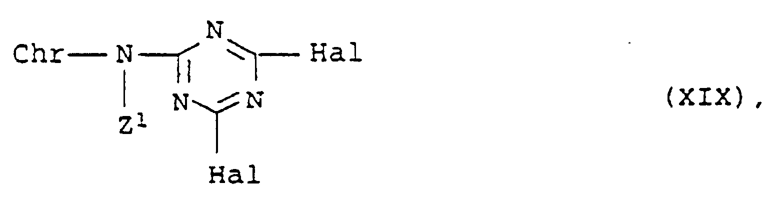 avec 1 équivalent molaire d'une polyamine de formule XX 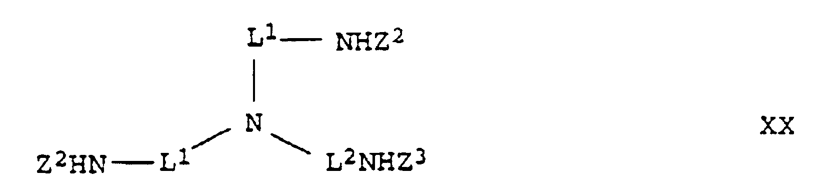 et les groupes NHZ³ encore contenus dans le mélange réactionnel sont ensuite acylés ou convertis en esters ou amides d'acide carbonique.

10. Utilisation des colorants réactifs ou de mélanges de ceux-ci selon les revendications 1 à 9, pour la teinture ou l'impression de supports comportant des groupes hydroxy ou des atomes d'azote.
